# EUROPEAN PATENT APPLICATION

(11) **EP 4 517 638 A1**
(43) Date of publication of application: **05.03.2025**
(21) Application number: 23795974.7
(22) Date of filing: 24.03.2023
(51) Int. Cl.: G06Q 50/06, H02J 3/00, H02J 3/32, H02J 3/38

(54) **POWER SUPPLY AND DEMAND MANAGEMENT SYSTEM AND POWER SUPPLY AND DEMAND MANAGEMENT METHOD**

(30) Priority: 27.04.2022 JP 2022073538
(71) Applicant: Hitachi, Ltd., Tokyo 100-8280 (JP)
(72) Inventor: SUZUKI Toshiaki, Tokyo 100-8280 (JP); SAITO Nao, Tokyo 100-8280 (JP); TAMAYO RUIZ Efrain Eduardo, Tokyo 100-8280 (JP); ISHII Yoshikazu, Tokyo 100-8280 (JP); JO Mingyu, Tokyo 100-8280 (JP)
(74) Representative: MERH-IP Matias Erny Reichl Hoffmann Patentanwälte PartG mbB
(86) International application number: PCT/JP2023/011917
(87) International publication number: WO 2023/210227

(57) **Abstract**

A power supply and demand management system includes a reception unit (71) that receives a supply bid of renewable energy power from a supply side of the renewable energy power and a demand bid of the renewable energy power from a demand side of the renewable energy power via communication, a matching unit (72) that performs matching between the received supply bid and the demand bid, an issuance unit (73) that, when a charge and discharge system capable of charging and discharging power receives renewable energy power as the demand side as a result of the matching, issues a correctable time division power certificate indicating that the renewable energy received power that is the received renewable energy power is derived from the renewable energy, and a storage unit (74) that stores the time division power certificate issued by the issuance unit (73), in which the issuance unit (73) describes, in the time division power certificate, a power usage time division indicating a date, time, and time zone when the renewable energy power is received.

## Description

### Technical Field

The present invention relates to a power supply and demand management system and a power supply and demand management method.

### Background Art

As a background art of the present technical field, there is JP 2011-164700 A (PTL 1). This publication describes that "a green power supply and demand certification device according to the present invention includes a power transmission/reception completion report verifying unit that compares power transmission result information (power transmission completion report) transmitted from a power transmission source that transmits green power with power reception result information (power reception completion report) transmitted from a power transmission destination that receives the green power from the power transmission source and verifies whether there is consistency, and a supply and demand information processing unit that associates the power transmission result information and the power reception result information determined to be consistent by the power transmission/reception completion report verifying unit and generates supply and demand information including the power transmission source, the power transmission destination, and a power transmission/reception amount of the green power" (see Abstract).

As another background art, there is JP 2011-175556 A (PTL 2). This publication describes that "there is provided a power trading server including: a first certificate acquiring unit configured to acquire, from a first user who wishes to sell power, a first certificate for certificating an amount of power storage of a first power storage means owned by the first user; a second certificate acquiring unit configured to acquire, from a second user who wishes to purchase power, a second certificate for certificating a free capacity of a second power storage means owned by the second user; a power selling restricting unit configured to restrict an amount of power that can be sold by the first user to an amount of power storage of the first power storage means based on the first certificate acquired by the first certificate acquiring unit; and a power purchase restricting unit that restricts the amount of power that can be purchased by the second user up to the free capacity of the second power storage unit based on the second certificate acquired by the second certificate acquiring unit" (see Abstract).

### Citation List

### Patent Literatures

PTL 1: JP 2011-164700 A
PTL 2: JP 2011-175556 A

### Summary of Invention

### Technical Problem

PTLs 1 and 2 described above disclose a system that performs trade of power. However, the techniques of PTLs 1 and 2 have room for improvement from the viewpoint of promoting trade of renewable energy.

Therefore, an object of the present invention is to provide a power supply and demand management system and a power supply and demand management method capable of promoting the trade of renewable energy.

### Solution to Problem

In order to solve the above problems, according to the present invention, there is provided a power supply and demand management system including: a reception unit that receives a supply bid of renewable energy power from a supply side of the renewable energy power and a demand bid of the renewable energy power from a demand side of the renewable energy power via communication; a matching unit that performs matching between the received supply bid and demand bid; an issuance unit that, when a charge and discharge system capable of charging and discharging power receives renewable energy power as the demand side as a result of the matching, issues a correctable certificate indicating that the renewable energy received power that is the received renewable energy power is derived from the renewable energy; and a storage unit that stores the certificate issued by the issuance unit, in which the issuance unit describes, in the certificate, a power usage time division indicating a date, time, and time zone when the renewable energy power is received.

### Advantageous Effects of Invention

According to the present invention, trade of renewable energy can be promoted.

Problems, configurations, and effects other than those described above will be clarified by the following description of embodiments.

### Brief Description of Drawings

[FIG. 1] FIG. 1 is a block diagram illustrating an entire system configuration according to a first embodiment.
[FIG. 2] FIG. 2 is a block diagram illustrating a hardware configuration of a power supply and demand management device.
[FIG. 3] FIG. 3 is a functional block diagram illustrating functions executed by the power supply and demand management device.
[FIG. 4A] FIG. 4A is a diagram illustrating an example of power supply bid data.
[FIG. 4B] FIG. 4B is a diagram illustrating an example of power demand bid data.
[FIG. 5] FIG. 5 is a diagram illustrating an example of power supply and demand contract data.
[FIG. 6A] FIG. 6A is a diagram illustrating an example of power supply amount data.
[FIG. 6B] FIG. 6B is a diagram illustrating an example of power demand amount data.
[FIG. 7A] FIG. 7A is a diagram illustrating an example of an updatable time division power certificate.
[FIG. 7B] FIG. 7B is a diagram illustrating an example of a time division power certificate that cannot be updated.
[FIG. 8] FIG. 8 is a block diagram illustrating data stored in an auxiliary storage device 54 or the like of the power supply and demand management device.
[FIG. 9A] FIG. 9A is an example of a supply and demand contract sequence diagram of generated power.
[FIG. 9B] FIG. 9B is an example of a supply and demand sequence diagram of generated power.
[FIG. 10A] FIG. 10A is an example of a supply and demand contract sequence diagram of discharge power between a charge and discharge system and a power demand system.
[FIG. 10B] FIG. 10B is an example of a supply and demand sequence diagram of discharge power between the charge and discharge system and the power demand system.
[FIG. 11] FIG. 11 is a flowchart illustrating a power supply and demand management procedure of the power supply and demand management device.
[FIG. 12] FIG. 12 is a block diagram illustrating an entire system configuration according to a second embodiment.
[FIG. 13A] FIG. 13A is an example of a sequence diagram for power supply and demand amount measurement with power supply compensation.
[FIG. 13B] FIG. 13B is an example of a sequence diagram for power supply and demand settlement with power supply compensation.
[FIG. 14A] FIG. 14A is an example of a sequence diagram for power supply and demand amount measurement with power demand compensation.
[FIG. 14B] FIG. 14B is an example of a sequence diagram for power supply and demand settlement with power demand compensation.
[FIG. 15A] FIG. 15A is an example of a supply and demand contract sequence diagram of discharge power for different charge and discharge systems.
[FIG. 15B] FIG. 15B is an example of a supply and demand sequence diagram of discharge power for different charge and discharge systems.

### Description of Embodiments

Hereinafter, a plurality of embodiments of the present invention will be described with reference to the drawings.

### First Embodiment

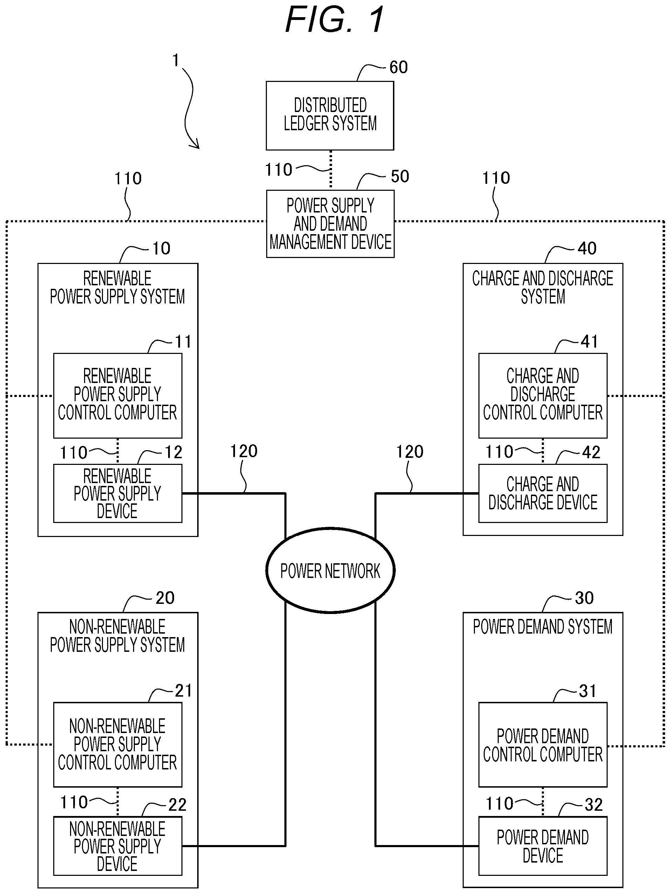

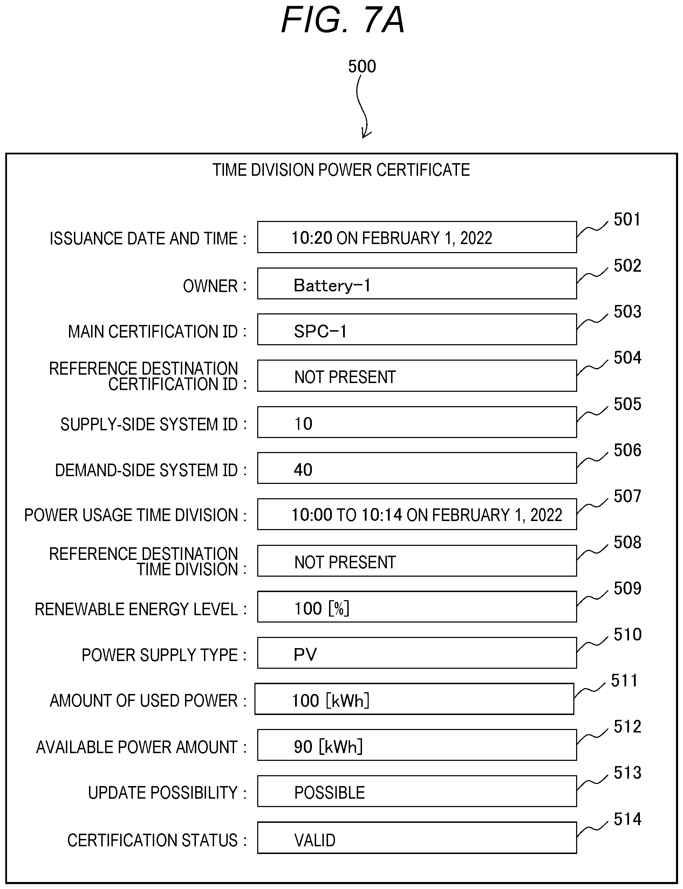

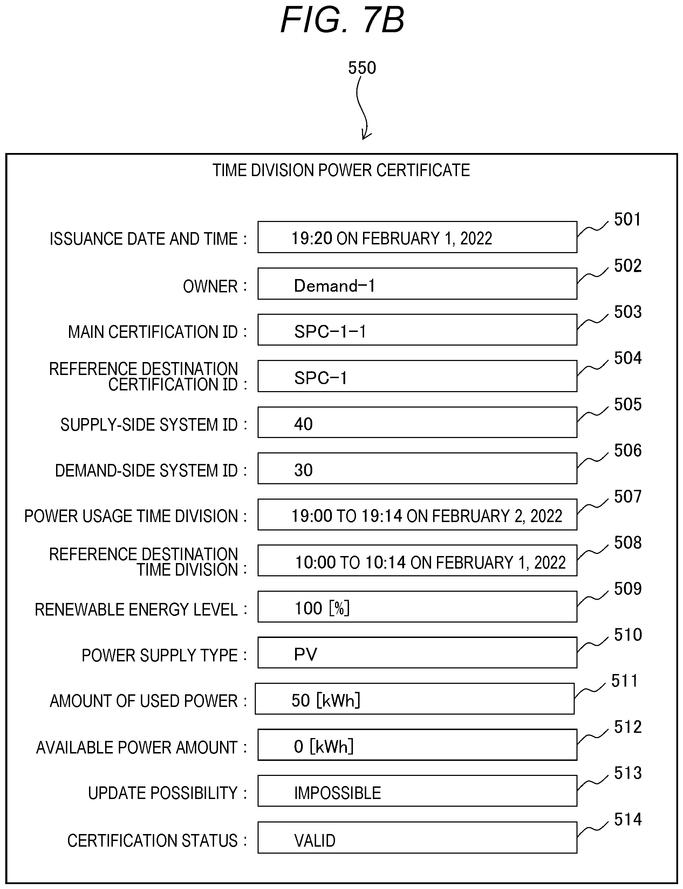

FIG. 1 is a block diagram illustrating an entire system configuration according to a first embodiment. As illustrated in FIG. 1, the system of the first embodiment includes a renewable power supply system 10 (supply side) that supplies renewable energy power, a non-renewable power supply system 20 (supply side) that supplies non-renewable energy power, a power demand system 30 (demand side) that consumes power, and a charge and discharge system 40 (supply side and demand side) that charges and discharges power. The power supply and demand management system 1 manages the demand and supply of power in the system. The power supply and demand management system 1 includes a power supply and demand management device 50 that is a core device that manages the demand and supply of power in the system, and a distributed ledger system (backup device) 60 that performs backup storage on data such as time division power certificates (certificates) 500 and 550 (FIGS. 7A and 7B) stored in the power supply and demand management device 50.

The power supply and demand management device 50, the renewable power supply system 10, the non-renewable power supply system 20, the power demand system 30, and the charge and discharge system 40 are communicably connected to each other via a communication network 110 such as the Internet. The power supply and demand management device 50 and the distributed ledger system 60 are also communicably connected to each other via a communication network 110. A plurality of renewable power supply systems 10, a plurality of non-renewable power supply systems 20, a plurality of power demand systems 30, and a plurality of charge and discharge systems 40 are normally communicably connected to the power supply and demand management device 50.

The renewable power supply system 10 includes, for example, a renewable power supply device 12 that generates renewable energy power such as a solar power generator, a wind power generator, a tidal power generator, or a geothermal power generator, and a renewable power supply control computer 11 that is a computer that controls the renewable power supply device 12. The renewable power supply control computer 11 accesses the power supply and demand management device 50 via the communication network 110 and bids for power supply or the like.

The non-renewable power supply system 20 includes, for example, a non-renewable power supply device 22 that generates non-renewable energy power by fossil fuel, nuclear power, or the like, and a non-renewable power supply control computer 21 that is a computer that controls the non-renewable power supply device 22. The non-renewable power supply control computer 21 accesses the power supply and demand management device 50 via the communication network 110 and bids for power supply or the like.

The power demand system 30 includes, for example, a power demand device 32 that consumes power, such as a machine tool, and a power demand control computer 31 that is a computer that controls the power demand device 32. The power demand control computer 31 accesses the power supply and demand management device 50 via the communication network 110 and bids for power demand or the like.

The charge and discharge system 40 includes, for example, a charge and discharge device 42 capable of charging and discharging power such as a battery, and a charge and discharge control computer 41 that is a computer for controlling the charge and discharge device 42. The charge and discharge control computer 41 accesses the power supply and demand management device 50 via the communication network 110, and performs power demand bid, power supply bid, and the like.

Although not illustrated in the drawings, the distributed ledger system 60 includes a plurality of data recording nodes, and each node records and holds data of the same content. This distributed ledger system is constructed using, for example, a blockchain technology or the like.

The renewable power supply device 12, the non-renewable power supply device 22, the power demand device 32, and the charge and discharge device 42 can transfer power to and from each other via a power network 120 which is a power transmission and distribution network.

Next, an operation outline of the system of the first embodiment will be described. In order to sell renewable energy power, the renewable power supply system 10 bids for power supply to the power supply and demand management device 50 via the communication network 110. When the supply and demand contract is established, the renewable power supply system 10 supplies renewable energy power via the power network 120. Further, the renewable power supply system 10 measures the supplied renewable energy power amount and notifies the power supply and demand management device 50 of the amount.

In order to sell non-renewable energy power, the non-renewable power supply system 20 bids for power supply to the power supply and demand management device 50 via the communication network 110. When the supply and demand contract is established, the non-renewable power supply system 20 supplies non-renewable energy power via the power network 120. In addition, the non-renewable power supply system 20 measures the supplied non-renewable energy power amount and notifies the power supply and demand management device 50 of the amount.

In order to obtain necessary power, the power demand system 30 bids for power demand to the power supply and demand management device 50 via the communication network 110. When the supply and demand contract is established, the power demand system 30 receives and consumes the contracted power. In addition, the power demand system 30 measures the amount of consumed power and notifies the power supply and demand management device 50 of the amount.

When selling power by discharging, the charge and discharge system 40 bids for power supply to the power supply and demand management device 50 via the communication network 110. When the supply and demand contract is established, the contracted power supply is performed. Meanwhile, when power is purchased by charging, a bid for power demand is made to the power supply and demand management device 50. When the supply and demand contract is established, the charge and discharge system 40 receives the contracted power. In addition, the charge and discharge system 40 measures the amount of power supplied or received, and notifies the power supply and demand management device 50 of the amount. The supply and demand bid specifications will be described later.

The power supply and demand management device 50 performs backup storage on the contents of the received demand bid and supply bid of power in the distributed ledger system 60 via the communication network 110. In addition, the power supply and demand management device 50 performs matching processing between the demand bid and supply bid of the received power. When the conditions are met between the supply bid and the demand bid of the power, the power supply and demand management device 50 establishes a supply and demand contract, and notifies the system that has performed the power supply and demand bid of the contract establishment. Further, the power supply and demand management device 50 performs backup storage on the supply and demand contents for which the contract is established in the distributed ledger system 60 via the communication network 110. Further, the power supply and demand management device 50 receives a notification of the supplied power amount or the consumed power amount, and records the notification in the distributed ledger system 60 via the communication network 110. In the supply and demand of renewable energy power, when the supply amount and the demand amount match the contracted amount, a certification of renewable energy power use is issued to a system that has consumed power. When the renewable energy power is charged, a certificate (time division power certificate 500 (see FIG. 7A)) of use of the renewable energy power that can be corrected is issued, and when the renewable energy power is consumed, a certificate (time division power certificate 550 (see FIG. 7B)) of use of the renewable energy power that cannot be corrected is issued. Further, the issued certificate data of the use of renewable energy power is backed up and recorded in the distributed ledger system 60.

The distributed ledger system 60 records and holds received power supply and demand bid data, contract established matching data, notification data related to the amount of supplied and demanded power, issued certificate data of renewable energy power use, and the like.

Next, the system configuration of the power supply and demand management system 1 and the detailed operation content of the system focusing on the power supply and demand management system 1 will be described.

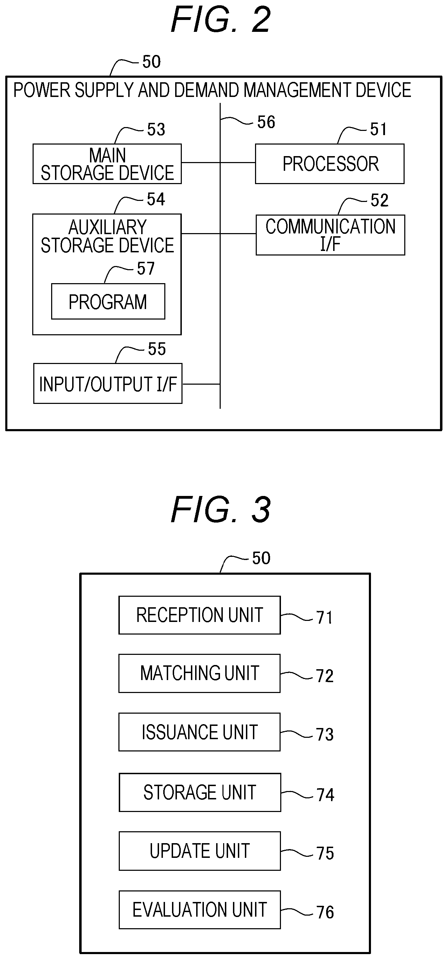

FIG. 2 is a block diagram illustrating a hardware configuration of the power supply and demand management device 50. As illustrated in FIG. 2, the power supply and demand management device 50 includes a processor 51, a communication interface (I/F) 52, a main storage device 53, an auxiliary storage device 54, an input/output I/F55, and a bus 56 that communicably connects the above-described modules. The power supply and demand management device 50 may be a computer such as one server or a plurality of computers such as servers may cooperate to provide various functions.

The processor 51 is a central processing calculation unit that controls the operation of each unit of the power supply and demand management device 50. The processor 51 is, for example, a central processing unit (CPU), a digital signal processor (DSP), an application specific integrated circuit (ASIC), or the like. The processor 51 develops a program 57 stored in the auxiliary storage device 54 in a work area of the main storage device 53 in an executable manner. The main storage device 53 stores a program executed by the processor 51, data processed by the processor, and the like. The main storage device 53 is a flash memory, a random access memory (RAM), a read only memory (ROM), or the like. The auxiliary storage device 54 stores various programs and various data. The auxiliary storage device 54 stores, for example, an operating system (OS), various programs including the program 57, various tables, and the like. The auxiliary storage device 54 is a silicon disk including a nonvolatile semiconductor memory (flash memory and erasable programmable ROM(EPROM)), a solid state drive device, a hard disk (HDD, Hard Disk Drive) device, or the like. Note that the program 57 may be downloaded from a predetermined location via the communication network 110 and set up in the auxiliary storage device 54, or the program 57 may be read from a predetermined storage medium storing the program 57 and set up in the auxiliary storage device 54.

The communication I/F52 is an interface for communicably connecting the systems and the power supply and demand management device 50 via the communication network 110. The input/output I/F55 receives an operation instruction or the like from an administrator who operates an input device connected to the input/output I/F55. The input device is, for example, a keyboard, a touch panel, a mouse, a microphone, or the like. Furthermore, for example, a display device such as an LCD, an electroluminescence (EL) panel, or an organic EL panel, or an output device such as a printer or a speaker can be connected to the input/output I/F55. The input/output I/F55 outputs data and information processed by the processor 51 and data and information stored in the main storage device 53 and the auxiliary storage device 54 to an output device.

Since the hardware configuration of the distributed ledger system 60 conforms to the power supply and demand management device 50, illustration and description thereof are omitted here.

Meanwhile, PTLs 1 and 2 described above disclose a system that performs trade of power. Also in the system of the first embodiment, the power supply and demand management device 50 performs matching between supply bids from the renewable power supply system 10 and the non-renewable power supply system 20 on the supply side and demand bids from the power demand system 30 on the demand side to enter a power purchase and sale agreement.

However, in the techniques of PTLs 1 and 2, there is room for improvement from the viewpoint of promoting the trade of renewable energy. That is, the power generation of the renewable energy power by the renewable power supply system 10 depends on natural conditions. For example, the solar power generator cannot generate power at night and generates less power even in cloudy weather. In addition, the wind power generator cannot generate power when there is no wind, and the amount of power generation decreases even when there is a gentle wind. As described above, the renewable energy power generated by the renewable power supply system 10 depends on natural conditions. Therefore, in a case where the charge and discharge system 40 is charged with renewable energy power when the renewable power supply system 10 can sufficiently generate power (at this time, the charge and discharge system 40 is on the demand side) and the power is supplied from the charge and discharge system 40 to the power demand system 30 when the power cannot be generated or the power generation amount is small (at this time, the charge and discharge system 40 is on the supply side), the use of the renewable energy power is promoted.

However, it is not clear whether the power charged in the charge and discharge system 40 is renewable energy power or non-renewable energy power if it is only charged. In addition, even when the charge and discharge system 40 is charged with renewable energy power, it is necessary to devise measures to promote the trade.

Hereinafter, details of processing of the power supply and demand management system 1 that promotes the trade of renewable energy power charged in the charge and discharge system 40 will be described in detail.

FIG. 3 is a functional block diagram illustrating functions executed by the power supply and demand management device 50. The power supply and demand management device 50 executes the functional units of a reception unit 71, a matching unit 72, an issuance unit 73, a storage unit 74, an update unit 75, and an evaluation unit 76 by the processing based on the program 57. First processing to fourth processing of the following (1) to (4) are executed by these functional units.

### (1) First Processing

The reception unit 71 receives the supply bid of the renewable energy power from the supply side of the renewable energy power (renewable power supply system 10, charge and discharge system 40) and the demand bid of the renewable energy power from the demand side of the renewable energy power (power demand system 30, charge and discharge system 40) via communication of the communication network 110 (reception step).

The matching unit 72 performs matching between the supply bid and the demand bid received by the reception unit 71 (matching step).

As a result of this matching, when the charge and discharge system 40 capable of charging and discharging power receives the renewable energy power as the demand side, the issuance unit 73 issues a correctable certificate (time division power certificate 500 (FIG. 7A)) indicating that the renewable energy received power, which is the renewable energy power to be received, is derived from the renewable energy (issuing step).

The storage unit 74 stores the certificate (the time division power certificate 500 and the like) issued by the issuance unit 73 (storage step).

Then, the issuance unit 73 describes the power usage time division 507 indicating the date, time, and time zone when the renewable energy power is received in the certificate (time division power certificate 500) (issuing step) .

### (2) Second Processing

As a result of the matching in the matching unit 72, when the charge and discharge system 40 supplies the renewable energy received power charged in the charge and discharge system 40 as the supply side to the demand side, the update unit 75 updates the certificate (time division power certificate 500) corresponding to the supplied renewable energy received power so as not to be correctable (update step).

### (3) Third Processing

When receiving the supply bid from the charge and discharge system 40, the reception unit 71 receives the certificate (time division power certificate 500) or an identification mark (main certification ID503) of the certificate from the charge and discharge system 40 (reception step).

Then, the evaluation unit 76 evaluates whether the charge and discharge system 40 can supply the renewable energy received power based on the certificate (the time division power certificate 500) or the identification mark (main certification ID503) received by the reception unit 71 (evaluation step).

In addition, when the evaluation unit 76 determines that the charge and discharge system 40 can supply the renewable energy received power, the reception unit 71 receives a supply bid from the charge and discharge system 40 (reception step).

In this case, the evaluation unit 76 performs the above evaluation based on the amount of power obtained by subtracting the amount of power naturally discharged according to a time difference from the time when the charge and discharge system 40 receives the renewable energy received power to the time when the renewable energy received power is supplied from the amount of power of the renewable energy power that can be supplied from the charge and discharge system 40 (evaluation step).

### (4) Fourth Processing

As a result of the matching by the matching unit 72, when the charge and discharge system 40 receives the renewable energy power as the demand side, the issuance unit 73 describes an available power amount 512 indicating the amount of power of the renewable energy power that can be supplied from the charge and discharge system 40 in the certificate (time division power certificate 500) (issuing step) .

In this case, the issuance unit 73 sets a value calculated based on charging and discharging efficiency to the amount of power from which the charge and discharge system 40 has received the renewable energy received power as the available power amount 512 (issuing step).

The available power amount 512 is smaller than the amount of power of the renewable energy received power.

Hereinafter, details of specific implementation processing of the first processing to the fourth processing will be described in detail.

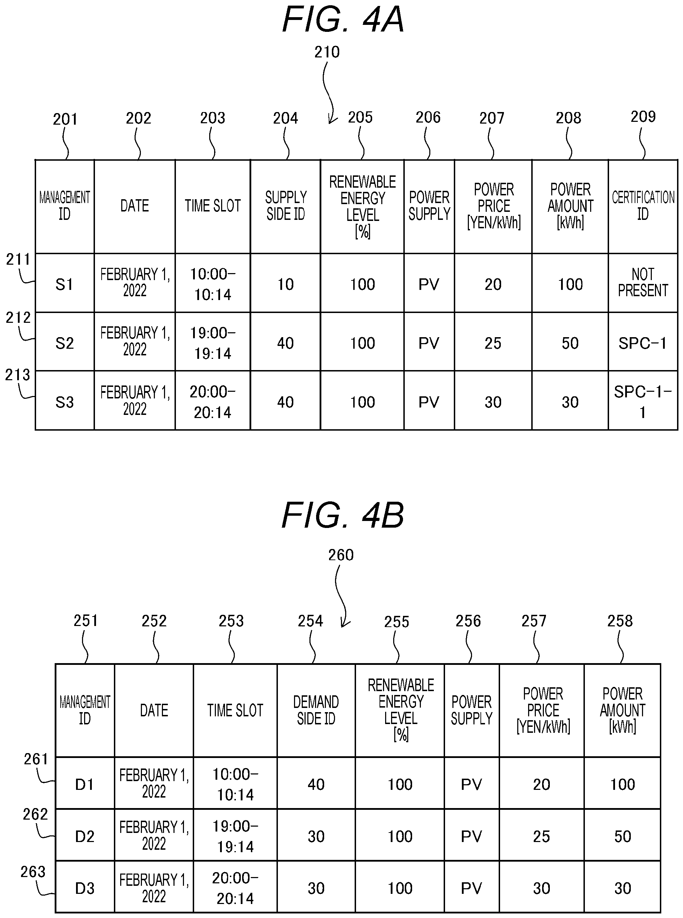

FIG. 4 is an example of the power supply and demand bid data in the first embodiment. FIG. 4A is an example of power supply bid data, and FIG. 4B is an example of power demand bid data. A power supply side performs the supply bid by presenting power supply bid data, and a power demand side performs the demand bid by presenting power demand bid data. These data are stored in the power supply and demand management device 50.

In FIG. 4A, the power supply bid data 210 includes fields of a management identifier (ID) 201 which is an identification mark for identifying each application, a date 202 on which power can be supplied, a time slot 203 which is a time zone in which power can be supplied, a supply side ID204 which is an identification mark of a supply-side system, a renewable energy level (205) indicating a ratio of an amount of power generated by the renewable energy to a total amount of power that can be supplied, a type of a power supply 206, a power price 207 as a lower limit value, an amount of power to be supplied 208, and a certification ID209 which is an identification mark indicating holding of the renewable energy power.

A power supply bid S1 illustrated in a row 211 indicates that the date of supply of power is February 1, 2022, the supply time slot is 15 minutes from 10:00 to 10:14, the ID of the system that supplies power is 10, the renewable energy level of the power to be supplied is 100%, the type of power supply is photovoltaic (PV), the power price as a lower limit is 20 yen/kWh, the amount of power to be supplied is 100kWh, and there is no certification ID indicating the holding of renewable energy power. Note that, in the renewable energy power supply from a system capable of generating renewable energy power, for example, the renewable power supply system 10, it is indicated that a bid can be made without requiring the certification ID indicating the holding of the renewable energy power.

A power supply bid S2 illustrated in a row 212 indicates that the date of supply of power is February 1, 2022, the supply time slot is 15 minutes from 19:00 to 19:14, the ID of the system that supplies power is 40, the renewable energy level is 100%, the type of power supply is photovoltaic (PV), the power price as the lower limit is 25 yen/kWh, the amount of power to be supplied is 50kWh, and the certification ID indicating the holding of renewable energy power is the SPC-1. Note that, in a case where a system that supplies power is a system that cannot generate renewable energy power, for example, in a case where renewable energy power is supplied from the charge and discharge system 40, it is indicated that a certification ID indicating the holding of the renewable energy power with respect to the amount of power to be supplied is necessary for bidding.

Power supply bid S3 illustrated in a row 213 has the same configuration contents. When the supply-side system is the renewable power supply system 10, the renewable energy level of the supplied power is 100%. Meanwhile, when the supply-side system is the non-renewable power supply system 20, the renewable energy level of the supplied power is 0%. When the system on the supply side is the charge and discharge system 40, both the renewable energy power and the non-renewable energy power can be charged, and the renewable energy level of the power to be supplied can be set from 0% to 100%.

In FIG. 4B, the power demand bid data 260 includes fields of a management ID251 which is an identification mark for identifying each application, a date 252 at which power can be consumed, a time slot 253 at which power can be consumed, a demand side ID254 which is an identification mark of a system on the demand side, a renewable energy level 255 indicating a ratio of an amount of power generated by the renewable energy in the amount of power consumed, a type of power supply 256, a power price 257 as an upper limit value, and an amount of power consumed 258.

A power demand bid D1 illustrated in a row 261 indicates that a demand date of power is February 1, 2022, a supply time slot is 15 minutes from 10:00 to 10:14, an ID of a system using power is 40, a desired renewable energy level is 100%, a type of power supply is photovoltaic (PV), a power price as an upper limit is 20 yen/kWh, and an amount of power to be consumed (charged) is 100kWh.

Power demand bids D2 and D3 illustrated in rows 262 and 263 have similar configuration contents.

In the first embodiment, the time slots 203 and 253 of the power supply and demand have been described by taking 15 minutes as an example, but other values, for example, 5 minutes or other time units may be designated. Although the unit price per 1kWh has been described as the power price 257, other price specifications such as a unit price per 1Wh may be used. In addition, in a system that consumes power, the renewable energy level can be set from 0% to 100% in the power demand bid.

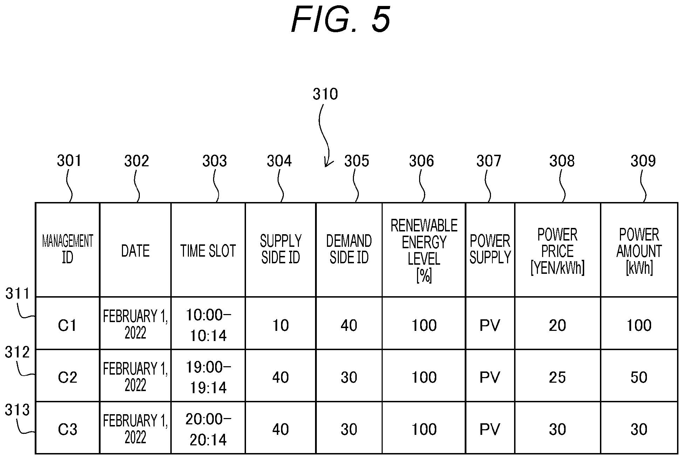

FIG. 5 is an example of power supply and demand contract data in the first embodiment. When the demand bid and the supply bid match due to the matching of the matching unit 72 and the power reception contract is established, the power supply and demand contract data 310 is recorded in the power supply and demand management device 50.

The power supply and demand contract data 310 includes fields of a management ID301 which is an identification mark for identifying each contract, a date 302 when power supply and demand is possible, a time slot 303 which is a time zone when power supply and demand is possible, a supply side ID304 of a supply-side system, a demand side ID305 of a demand-side system, a renewable energy level 306, a type of power supply 307, a contracted power price 308, and a contracted power amount 309.

A contract C1 illustrated in a row 311 indicates that the date of the power supply and demand is February 1, 2022, the time slot is 15 minutes from 10:00 to 10:14, the supply side ID of the supply-side system is 10, the demand side ID of the demand-side system is 40, the renewable energy level is 100%, the type of the power supply is photovoltaic (PV), the power price at which the contract is concluded is 20 yen/kWh, and the power amount is 100kWh. Contracts C2 and C3 illustrated in rows 312 and 313 have similar configuration contents.

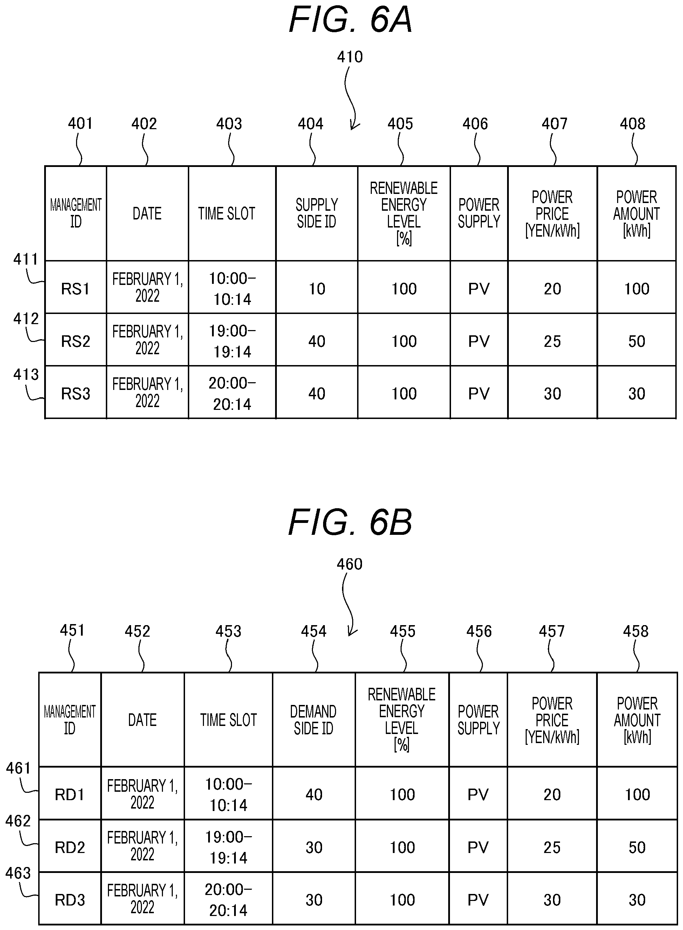

FIG. 6 is an example of notification data of the amount of power supplied and the amount of power consumed in the first embodiment. FIG. 6A is an example of power supply amount data, and FIG. 6B is an example of power demand amount data. When power is exchanged between the demand side and the supply side of the power based on the power supply and demand contract data 310, the power supply amount data is transmitted from the supply side and the power demand amount data is transmitted from the demand side to the power supply and demand management device 50, and the power supply and demand management device 50 stores these data.

In FIG. 6A, the power supply amount data 410 includes fields of a management ID401 which is an identification mark for identifying each contract, a date of power supply 402, a time slot 403 indicating a time of power supply, a supply side ID404 which is an identification mark of a system on the supply side, a renewable energy level 405, a power supply (type) 406, a power price 407, and a supplied power amount 408.

Power supply amount data RS1 illustrated in a row 411 indicates that the date of power supply is February 1, 2022, the time slot is 15 minutes from 10:00 to 10:14, the supply-side system ID is 10, the renewable energy level is 100%, the type of power supply is photovoltaic (PV), the power price is 20 yen/kWh, and the supplied power amount is 100kWh. Power supply amount data RS2 and RS3 illustrated in rows 412 and 413 have the same configuration.

In FIG. 6B, the power demand amount data 460 includes fields of a management ID451 which is an identification mark for identifying each contract, a date 452 when power supply is received, a time slot 453 indicating a time when power supply is received, an identification mark ID454 of a system on a demand side, a renewable energy level 455 of consumed power, a power supply (type) 456, a power price 457, and a consumed (or charged) power amount 458.

Power demand amount data RD1 illustrated in a row 461 indicates that the date of power demand is February 1, 2022, the time slot is 15 minutes from 10:00 to 10:14, the demand-side system ID is 40, the renewable energy level is 100%, the type of power supply is photovoltaic (PV), the power price is 20 yen/kWh, and the amount of consumed (charged) power is 100kWh. Power supply amount data RS2 and RS3 illustrated in rows 462 and 463 have the same configuration.

FIG. 7 is an example of a time division power certificate issued at the time of power consumption (charging) in the first embodiment. In a case where the time slot on the supply side and the time slot on the demand side are the same with respect to the renewable energy power, the time division power certificates 500 and 550 are issued as a certificate of use of the renewable energy power according to the amount of supplied and demanded power. FIG. 7A is an example of a time division power certificate issued at the time of power charge (power reception) in the charge and discharge system 40, and FIG. 7B is an example of a time division power certificate issued at the time of power consumption on the demand side of the power supplied from the charge and discharge system 40.

The time division power certificate 500 illustrated in FIG. 7A includes fields of an issuance date and time 501 of the certificate, an owner 502 of the certificate (an identification mark such as a name and an ID), and a main certification ID503 which is an identification mark of the certificate. In addition, the time division power certificate 500 also includes a field of a reference destination certification ID504 (when the renewable energy power indicated by a certain time division power certificate 500 is supplied separately, a new time division power certificate 500 is issued to the divided power, and the main certification ID503 and the like of the time division power certificate 500 of the power that is the source are described) which is the main certification ID503 or the like serving as an identification mark of the time division power certificate 500 from which the certificate inherits. The time division power certificate 500 also includes fields of a supply-side system ID505 that is an identification mark of a system on the power supply side and a demand-side system ID506 that is an identification mark of a system on the power demand side.

In addition, the time division power certificate 500 also includes fields of a power usage time division 507 that is a date and a time zone (time slot) in which supply and demand of renewable energy power (power supply to the charge and discharge system 40) is performed. The time division power certificate 500 also includes fields of a reference destination time division 508 that is a date and a time zone (time slot) of supply and demand of the original renewable energy power indicated by the reference destination certification ID504, and a renewable energy level 509 of the supply and demand power.

The time division power certificate 500 also includes fields of a power supply type 510 (difference in power supply between photovoltaic and wind power generation), an amount of power used 511 which is the amount of power used, and the available power amount 512, which is the amount of power that the charge and discharge system 40 can supply when the charge and discharge system 40 is charged. The available power amount 512 is a value set based on charging and discharging efficiency when the charge and discharge system 40 receives and discharges renewable energy power. The available power amount 512 limits the amount of renewable energy power that can be supplied from the charge and discharge system 40 to the amount.

In addition, the time division power certificate 500 also includes fields of update possibility 513 (possible or impossible) indicating whether the certificate can be updated and a certification status 514 (valid or invalid) indicating whether the certificate is valid.

In the time division power certificate 500 illustrated in FIG. 7A, the issuance date and time 501 is 10:20 on February 1, 2022, the owner 502 of the corresponding power is the Batter-1, and the main certification ID503 is the SPC-1. In addition, there is no reference destination certification ID504, indicating that the corresponding power has been obtained by supply and demand of the directly generated renewable energy power. This indicates that the supply-side system ID505 is 10, the demand-side system ID506 is 40, the power usage time division 507 using renewable energy power is from 10:00 to 10:14 on February 1, 2022, and there is no reference destination time division 508. It also indicates that the renewable energy level of the used power is 100%, the type of the power supply is photovoltaic (PV), the amount of used power 511, which is the amount of used (charged) power, is 100kWh, and the available power amount 512 that can be supplied by discharge is 90kWh. Here, the amount of used power 511 is 100kWh, but since the charging and discharging efficiency of the charge and discharge system 40 is 90%, the available power amount 512 by the discharge is limited to 90kWh. In addition, in a case where power is supplied from the corresponding charge and discharge system 40 by discharge using the time division power certificate 500, when there is a difference period between a time slot in which power is charged and a time slot in which power is supplied by discharge, power can be supplied up to a predetermined ratio, for example, a value considering natural discharge of a ratio such as 5% in 30 days. The update possibility 513 of the time division power certificate 500 is set to "possible", indicating that the charge and discharge system 40 can supply power to the demand side by discharge. In addition, the certification status 514 is set to "valid", indicating that the time division power certificate 500 is valid.

The time division power certificate 550 illustrated in FIG. 7B is created by updating the time division power certificate 500 corresponding to the renewable energy power to be supplied when the charge and discharge system 40 supplies the renewable energy power charged as the supply side to the demand side as a result of the matching in the matching unit 72 in the update unit 75.

The time division power certificate 550 indicates that the issuance date and time 501 is 19:20 on February 1, 2022, the owner 502 of the corresponding power is Demand-1, and the main certification ID503 is the SPC-1-1. In addition, the reference destination certification ID504 is the SPC-1, indicating that supply and demand of renewable energy power is performed by discharge from the charge and discharge system 40. In this example, it is indicated that the renewable energy power indicated by the SPC-1 of the reference destination certification ID504 is the original power, the original power is divided and a part thereof is supplied, the time division power certificate 550 is issued for the consumption of the divided and supplied renewable energy power, and the number SPC-1-1 is assigned to the power as the main certification ID503. Therefore, the branch number "-1" is assigned to the SPC-1 of the reference destination certification ID504 indicating the original power, and the main certification ID503 of the divided power is the SPC-1-1. This indicates that the supply-side system ID505 is 40, the demand-side system ID506 is 30, the power usage time division 507 using renewable energy power is February 1, 2022, from 19:00 to 19:14, and the reference destination time division 508 is February 1, 2022, from 10:00 to 10:14. This indicates that the renewable energy level 509 of the used power is 100%, the power supply type 510 is photovoltaic (PV), the amount of used (consumed) power 511 is 50kWh, and the available power amount by discharge is 0kWh (no more power can be supplied). Moreover, the update possibility 513 is set to "impossible", which indicates that power supply by discharge is impossible. In addition, the certification status 514 is set to "valid", indicating that the time division power certificate 550 is valid.

In the first embodiment, the case where the renewable energy level 509 is 100% has been described. However, when power of 100kWh is used at other values such as 70%, 70kWh corresponds to the usage amount of renewable energy power.

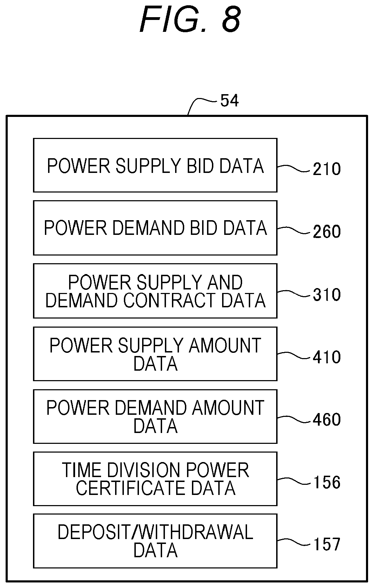

FIG. 8 is a block diagram illustrating data stored in the auxiliary storage device 54 (FIG. 2) or the like of the power supply and demand management device 50. The auxiliary storage device 54 holds the power supply bid data 210 (FIG. 4A), the power demand bid data 260 (FIG. 4B), the power supply and demand contract data 310 (FIG. 5), the power supply amount data 410 (FIG. 6A), the power demand amount data 460 (FIG. 6B), and the time division power certificate data 156 (data of the time division power certificate 500 (FIG. 7A) and the time division power certificate 550 (FIG. 7B)) necessary for executing the program 57. The power supply bid data 210 is list data of power supply bids. The power demand bid data 152 is list data of power demand bids. The power supply and demand contract data 310 is list data of a list of established power supply and demand contracts. The power supply amount data 410 is list data related to the measured power supply amount. The power demand amount data 460 is list data related to the measured demand power amount. The time division power certificate data 156 is list data that certifies that renewable energy power has been used for a specific time division (time slot) of a specific date. Deposit/withdrawal data 157 is list data of the withdrawal and the deposit when settlement processing is performed in the power supply and demand.

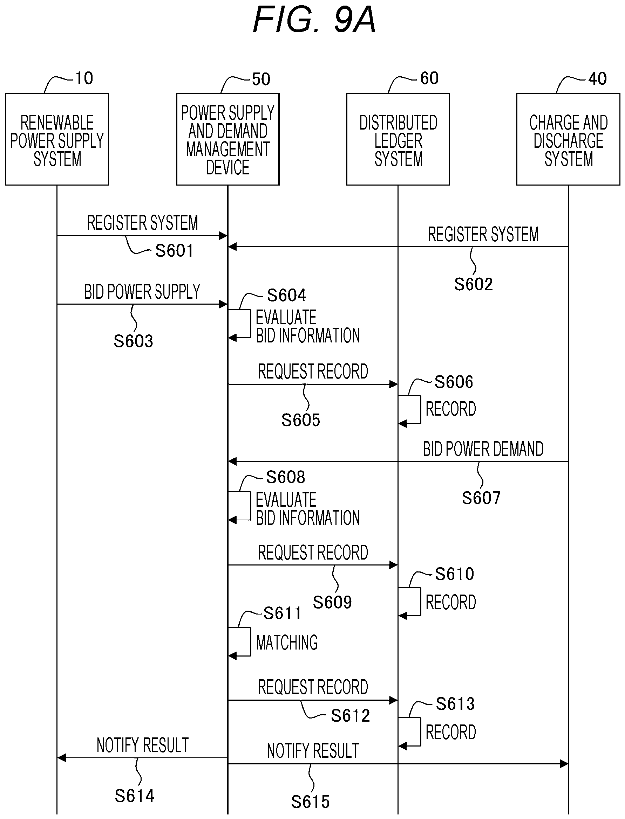

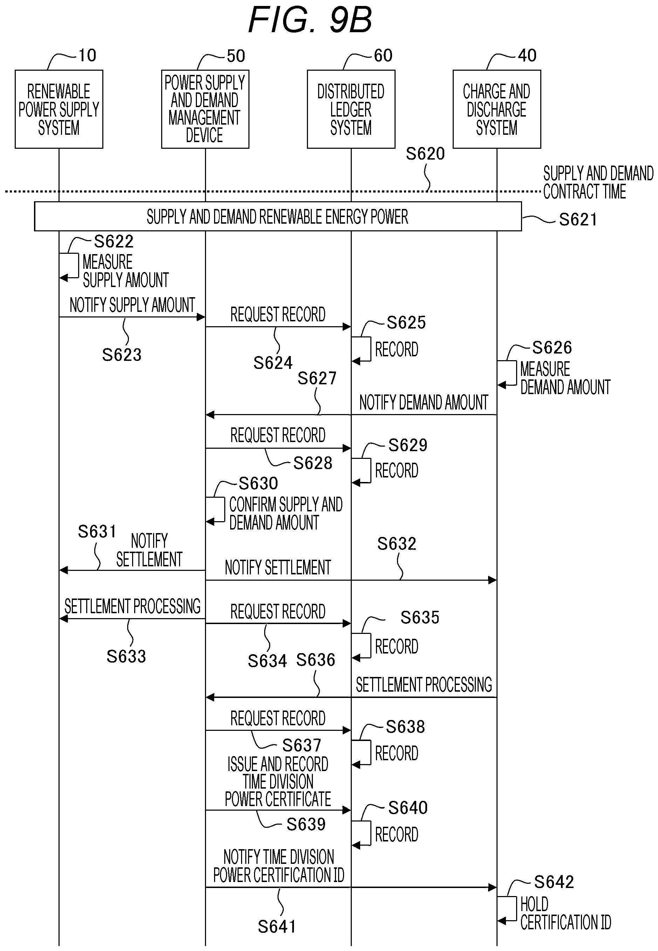

FIG. 9 is an example of a supply and demand contract sequence diagram and a supply and demand sequence diagram for generated power in the first embodiment. FIG. 9A is an example of a supply and demand contract sequence diagram of generated power, and FIG. 9B is an example of a supply and demand sequence diagram of generated power.

In FIG. 9A, first, in order to participate in a power supply and demand trade, the renewable power supply system 10 registers, as a power generation system capable of supplying renewable energy power, an ID that is an identification mark and a power generation capacity in the power supply and demand management device 50 (Step S601). This registration may be performed only once.

In order to participate in the power supply and demand trade, the charge and discharge system 40 also registers an ID and a charge and discharge capacity as an identification mark in the power supply and demand management device 50 as a charge and discharge system capable of charging and discharging power (Step S602). This registration may be performed only once.

The renewable power supply system 10 causes the power supply and demand management device 50 to perform the supply bid on the renewable energy power assumed to be supplied (Step S603). As the power supply bid data 210, for example, the data illustrated in the row 211 of FIG. 4A is used to bid.

In the power supply and demand management device 50, the evaluation unit 76 determines whether to supply renewable energy power to the content of the received power supply bid data 210, and when there is no problem, the reception unit 71 receives the supply bid, and the storage unit 74 stores the power supply bid data 210 (FIG. 8) (Step S604). In addition, the storage unit 74 requests the distributed ledger system 60 to perform backup storage on the power supply bid data 210 (Step S605).

The distributed ledger system 60 performs backup storage on the received power supply bid data 210 (Step S606).

The charge and discharge system 40 causes the power supply and demand management device 50 to perform the demand bid for necessary renewable energy power (Step S607). As the demand bid data, for example, the power demand bid data 260 illustrated in the row 261 of FIG. 4B is used to perform the bid.

In the power supply and demand management device 50, the evaluation unit 76 confirms that the received power demand bid data 260 is charged from the charge and discharge system 40. When there is no problem, the reception unit 71 receives the power demand bid data 260, and the storage unit 74 stores the power demand bid data 260 (FIG. 8) (Step S608). In addition, the storage unit 74 requests the distributed ledger system 60 to perform backup storage on the power demand bid data 260 (Step S609).

The distributed ledger system 60 performs backup storage on the received power demand bid data 260 (Step S610).

In the power supply and demand management device 50, the matching unit 72 determines whether conditions are met between the supply bid of power and the demand bid of power, and establishes a power supply and demand contract when there is the supply bid and the demand bid meeting the conditions (Step S611). At this time, the power supply and demand contract data 310 is stored in the power supply and demand management device 50 by the storage unit 74 (FIG. 8). When the supply and demand contract is established, the storage unit 74 requests the distributed ledger system 60 to perform backup storage on the established power supply and demand contract data 310 (Step S612). As the established power supply and demand contract data 310, for example, data illustrated in the row 311 of FIG. 5 is used.

The distributed ledger system 60 performs backup storage on the received power supply and demand contract data 310 (Step S613).

The power supply and demand management device 50 notifies the renewable power supply system 10 that the power supply bid contract has been established (Step S614). In addition, the power supply and demand management device 50 notifies the charge and discharge system 40 that the contract for demand bid for power has been established (Step S615).

Upon establishment of the power supply and demand contract, in FIG. 9B, at the power supply and demand time (Step S620) indicated by the established contract, the renewable power supply system 10 supplies renewable energy power, and the charge and discharge system 40 charges the supplied power (Step S621).

The renewable power supply system 10 measures the amount of supplied power (Step S622). The renewable power supply system 10 notifies the power supply and demand management device 50 of data on the measured power amount (Step S623). As the supply power amount data, for example, the supply power amount is notified using the power supply amount data 410 illustrated in the row 411 of FIG. 6A.

The storage unit 74 stores the received power supply amount data 410 (FIG. 8), and requests the distributed ledger system 60 to perform backup storage on the received power supply amount data 410 (Step S624).

The distributed ledger system 60 performs backup storage on the received power supply amount data 410 (Step S625).

The charge and discharge system 40 measures the amount of charged power (Step S626). In addition, the charge and discharge system 40 notifies the power supply and demand management device 50 of data on the measured amount of renewable energy power (Step S627). As the charged power amount data, for example, the power demand amount data 460 illustrated in the row 461 of FIG. 6B is used to notify the charged power amount.

The storage unit 74 stores the received power demand amount data 460, and requests the distributed ledger system 60 to perform backup storage on the received power demand amount data 460 (Step S628).

The distributed ledger system 60 performs backup storage on the received power demand amount data 460 (Step S629).

The evaluation unit 76 confirms consistency between the supplied renewable energy power amount and the charged renewable energy power amount (supply and demand amount) with respect to the established supply and demand contract (Step S630). When there is no problem in the supply and demand consistency with respect to the renewable energy power, the power supply and demand management device 50 notifies the renewable power supply system 10 of the settlement determination (Step S631). Specifically, a payment determination notification of a consideration (unit price × supply amount) for the amount of supplied renewable energy power is made. In addition, the power supply and demand management device 50 notifies the charge and discharge system 40 of the settlement determination (Step S632). Specifically, a payment request notification of a consideration (unit price × supply amount) for the amount of charged renewable energy power is made.

The power supply and demand management device 50 performs payment settlement to the renewable power supply system 10 according to the determined settlement amount (Step S633). In addition, the storage unit 74 stores payment settlement data (deposit/withdrawal data 157 (FIG. 8)) for the renewable power supply system 10, and requests the distributed ledger system 60 to perform backup storage on the payment settlement data (deposit/withdrawal data 157) for the renewable power supply system 10 (Step S634).

The distributed ledger system 60 performs backup storage on payment settlement data (deposit/withdrawal data 157) for the received renewable power supply system 10 (Step S635).

The charge and discharge system 40 performs payment settlement to the power supply and demand management device 50 according to the determined settlement amount (Step S636).

The storage unit 74 stores the deposit settlement data (deposit/withdrawal data 157 (FIG. 8)) from the charge and discharge system 40, and requests the distributed ledger system 60 to perform backup storage on the deposit settlement data (deposit/withdrawal data 157) from the charge and discharge system 40 (Step S637).

The distributed ledger system 60 performs backup storage on the received deposit settlement data (deposit/withdrawal data 157) from the charge and discharge system 40 (Step S638).

When the deposit settlement from the charge and discharge system 40 is completed, the issuance unit 73 issues the time division power certificate 500 (FIG. 7A) for the amount of renewable energy power charged by the charge and discharge system 40, stores the time division power certificate in the storage unit 74, and also requests backup storage to the distributed ledger system 60 (Step S639). The time division power certificate 500 has been issued in response to charging of renewable energy power by the charge and discharge system 40, and indicates that the charge and discharge system 40 can supply renewable energy power by discharging, and thus "possible" is designated as the update possibility 513 (FIG. 7A). In addition, in order to indicate that the power that can be supplied by discharge in the charge and discharge system 40 is renewable energy power, a description column of the renewable energy level 509 and the power supply type 510 is provided, and the percentage of the renewable energy level and the type of the power supply are described. In addition, in the column of the power usage time division 507, the date and time zone (time slot) when the charge and discharge system 40 received the renewable energy power are indicated. The storage unit 74 stores the time division power certificate 500 (the time division power certificate data 156 in FIG. 8), and requests the distributed ledger system 60 to perform the backup storage thereof (Step S639).

The distributed ledger system 60 performs backup storage on the received time division power certificate 500 (Step S640).

The power supply and demand management device 50 notifies the charge and discharge system 40 of the main certification ID503 of the issued time division power certificate 500 (Step S641).

The charge and discharge system 40 holds the main certification ID503 of the received time division power certificate 500 (Step S642).

In the first embodiment, the settlement processing between the renewable power supply system 10 and the charge and discharge system 40 is performed via the power supply and demand management device 50, but the settlement processing may be directly performed by both of them. Further, in the first embodiment, the power supply and demand management device 50 manages the details of the time division power certificate 500 issued to the charge and discharge system 40, and notifies the charge and discharge system 40 of the main certification ID503 of the issued time division power certificate 500. Unlike this method, the power supply and demand management device 50 may provide details of the issued time division power certificate 500 to the charge and discharge system 40, and the power supply and demand management device 50 side may manage the main certification ID503 of the issued time division power certificate 500.

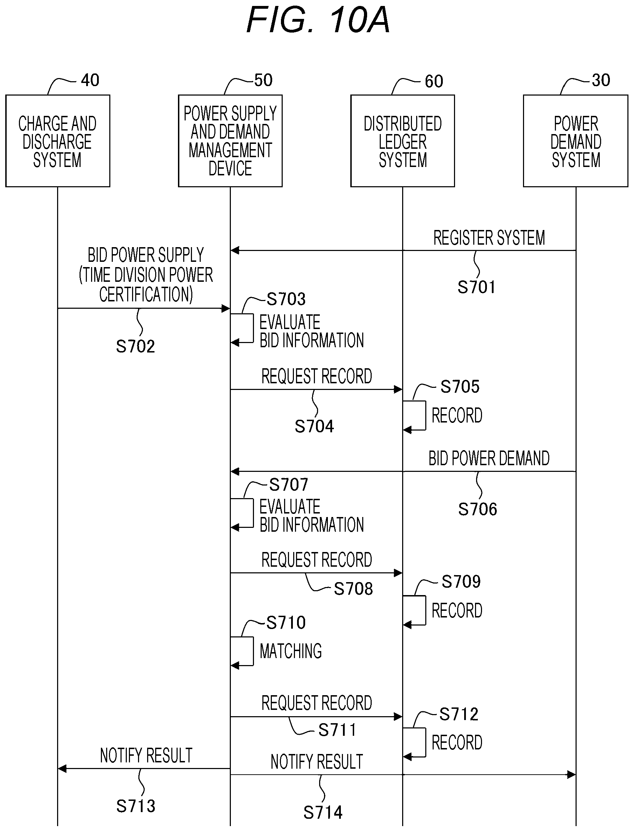

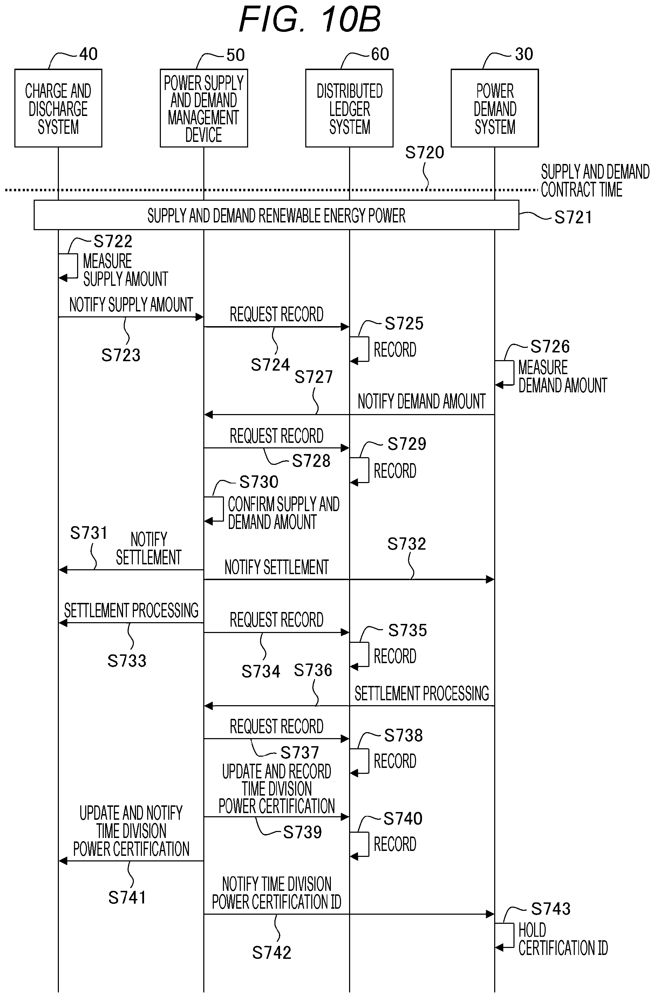

FIG. 10 is an example of a supply and demand contract and a supply and demand sequence diagram for discharge power in the first embodiment. FIG. 10 A is an example of a supply and demand contract sequence diagram of discharge power between the charge and discharge system 40 and the power demand system 30. FIG. 10B is an example of a supply and demand sequence diagram of discharge power between the charge and discharge system 40 and the power demand system 30.

In FIG. 10 A, first, the power demand system 30 causes the power supply and demand management device 50 to perform register the ID and the power consumption specification as a system that consumes power in order to participate in a power supply and demand trade (Step S701). This registration may be performed once.

The charge and discharge system 40 causes the power supply and demand management device 50 to perform on supply bid on the renewable energy power (renewable energy 100%) for which power selling is desired (Step S702). As the power supply bid data, for example, the power supply bid data 210 illustrated in the row 212 of FIG. 4A is used to make a bid. In this supply bid, it is necessary to indicate that the supply of the renewable energy power is possible (not the non-renewable energy) for the supply bid from the charge and discharge system 40 that does not directly generate the renewable energy power. Specifically, the charge and discharge system 40 needs to charge renewable energy power before the supply bid, thereby indicating that it holds the renewable energy power. Therefore, the charge and discharge system 40 perform supply bid on power including the main certification ID503 of the time division power certificate 500 indicating that renewable energy power is held.

The evaluation unit 76 determines whether to supply the renewable energy power with respect to the content of the received power supply bid data 210, and when there is no problem, the reception unit 71 receives the power supply bid data 210 together with the main certification ID503 of the time division power certificate 500, and the storage unit 74 stores the power supply bid data 210 (FIG. 8) (Step S703). In the main supply bid, the power supply bid is performed including the main certification ID503 of the time division power certificate 500 indicating that the charge and discharge system 40 holds the renewable energy power, and the evaluation unit 76 determines that the supply of the renewable energy power is possible. For example, the evaluation unit 76 determines that the amount of power to be supplied is 50kWh, 100kWh is charged according to the time division power certificate 500, and the power can be supplied up to 90kWh based on the amount of used power 511 and the available power amount 512 of the time division power certificate 500. In addition, the time difference between the charged time slot and the time slot scheduled to be supplied is, for example, 9 hours, and the evaluation unit 76 determines that it is possible to supply 50kWh of renewable energy power even in a case where the natural discharge amount (such as a ratio of 5% reduction over 30 days) is subtracted.

In addition, the storage unit 74 requests the distributed ledger system 60 to perform backup storage on the power supply bid data 210 (Step S704).

The distributed ledger system 60 performs backup storage on the received power supply bid data 210 (Step S705).

The power demand system 30 causes the power supply and demand management device 50 to perform the demand bid of the necessary renewable energy power (renewable energy level: 100%) (Step S706). As the power demand bid data, for example, the power demand bid data 260 illustrated in the row 262 of FIG. 4B is used to make a bid.

In the power supply and demand management device 50, the evaluation unit 76 confirms that the content of the received power demand bid data 260 indicates power consumption from the power demand system 30, and when there is no problem, the reception unit 71 receives the power demand bid data 260, and the storage unit 74 stores the same (FIG. 8) (Step S707). In addition, the storage unit 74 requests the distributed ledger system 60 to perform backup storage on the power demand bid data 260 (Step S708).

The distributed ledger system 60 performs backup storage on the received power demand bid data 260 (Step S709).

The matching unit 72 determines whether conditions are met between the supply bid of power and the demand bid of power (matching), and when there is the supply bid and the demand bid that meet the conditions, establishes the supply and demand contract of the power (Step S710). When the supply and demand contract is established, the storage unit 74 stores the established power supply and demand contract data 310 (FIG. 5) (FIG. 8), and requests the distributed ledger system 60 to perform backup storage on the power supply and demand contract data 310 (Step S711).

The distributed ledger system 60 performs backup storage on the received power supply and demand contract data 310 (Step S712).

The power supply and demand management device 50 notifies the charge and discharge system 40 that the power supply bid contract has been established (Step S713). In addition, the power supply and demand management device 50 notifies the power demand system 30 that the contract for demand bid for power has been established (Step S714).

In FIG. 10B, at a supply and demand contract time of the power established by the contract (Step S720), the charge and discharge system 40 supplies the renewable energy power, and the power demand system 30 consumes the supplied power (Step S721). In this case, the supply of the renewable energy power from the charge and discharge system 40 cannot be performed by an amount exceeding the amount of power described in the available power amount 512 of the time division power certificate 500. As described above, the available power amount 512 indicates an amount of power obtained by subtracting the amount of power from the amount of used power 511, which is an amount of power received by the charge and discharge system 40, in anticipation of charging and discharging efficiency.

The charge and discharge system 40 measures the amount of supplied power (Step S722). In addition, the charge and discharge system 40 notifies the power supply and demand management device 50 of data on the measured power amount (Step S723). As the power supply amount data, for example, the power supply amount data 410 illustrated in the row 412 of FIG. 6A is used to notify the supply power amount.

The storage unit 74 stores the received power supply amount data 410 (FIG. 8), and requests the distributed ledger system 60 to perform backup storage on the received power supply amount data 410 (Step S724).

The distributed ledger system 60 records the received power supply amount data 410 (Step S725).

The power demand system 30 measures the amount of consumed power (Step S726). In addition, the power demand system 30 notifies the power supply and demand management device 50 of the power demand amount data 460 related to the measured power amount (Step S727). As the power demand amount data 460, for example, the power consumption amount is notified using the power demand amount data 460 illustrated in the row 462 of FIG. 6B.

The storage unit 74 stores the power demand amount data 460 (FIG. 8), and requests the distributed ledger system 60 to perform backup storage on the power demand amount data 460 (Step S728).

The distributed ledger system 60 performs backup storage on the received power demand amount data 460 (Step S729).

The evaluation unit 76 confirms consistency between the amount of supplied renewable energy power and the amount of consumed renewable energy power with respect to the established supply and demand contract of power (Step S730). When there is no problem in the supply and demand consistency with respect to the renewable energy power, the power supply and demand management device 50 notifies the charge and discharge system 40 of the settlement determination (Step S731). Specifically, a payment determination notification of a consideration (unit price × supply amount) for the amount of supplied renewable energy power is made. In addition, the power supply and demand management device 50 notifies the power demand system 30 of the settlement determination (Step S732). Specifically, the payment request notification of the consideration (unit price × demand amount) for the amount of consumed renewable energy power is made.

The power supply and demand management device 50 performs payment settlement with respect to the charge and discharge system 40 according to the determined settlement amount (Step S733). In addition, the storage unit 74 stores payment settlement data (deposit/withdrawal data 157 (FIG. 8)) to the charge and discharge system 40, and requests the distributed ledger system 60 to perform backup storage on the payment settlement data (deposit/withdrawal data 157) to the charge and discharge system 40 (Step S734).

The distributed ledger system 60 performs backup storage on payment settlement data (deposit/withdrawal data 157) for the received charge and discharge system 40 (Step S735).

The power demand system 30 performs payment settlement with respect to the power supply and demand management device 50 according to the determined settlement amount (Step S736).

The storage unit 74 stores the deposit settlement data (deposit/withdrawal data 157) from the power demand system 30, and requests the distributed ledger system 60 to perform backup storage on the deposit settlement data (deposit/withdrawal data 157) from the power demand system 30 (Step S737).

The distributed ledger system 60 performs backup storage on the received deposit settlement data (deposit/withdrawal data 157) from the power demand system 30 (Step S738).

When the deposit settlement from the power demand system 30 is completed, the update unit 75 updates the time division power certificate 500 (FIG. 7A) with respect to the amount of consumed renewable energy power and issues the time division power certificate (FIG. 7B), and the storage unit 74 stores the time division power certificate 550 (time division power certificate data 156 in FIG. 8) and also requests the distributed ledger system 60 to perform backup storage (Step S739). Specifically, the time division power certificate 500 to be provided to the power demand system 30 is created in the form of updating the time division power certificate 550 presented by the charge and discharge system 40. The time division power certificate 550 has been issued in response to consumption of renewable energy power by the power demand system 30, and indicates that supply of renewable energy power based on the time division power certificate 550 is impossible. Therefore, "impossible" is described as the update possibility 513 of the main certification (FIG. 7B). Therefore, the description of the time division power certificate 550 cannot be rewritten.

The distributed ledger system 60 performs backup storage so as to update the time division power certificate 550 before the update with the received time division power certificate 500 (Step S740).

The power supply and demand management device 50 notifies the charge and discharge system 40 that the provided time division power certificate 500 has been updated (Step S741). In addition, the power supply and demand management device 50 notifies the power demand system 30 of the main certification ID503 of the updated and issued time division power certificate 550 (Step S742).

The power demand system 30 holds the main certification ID503 of the received time division power certificate 550 (Step S743). Instead of the main certification ID503, the data of the time division power certificate 550 may be received and held.

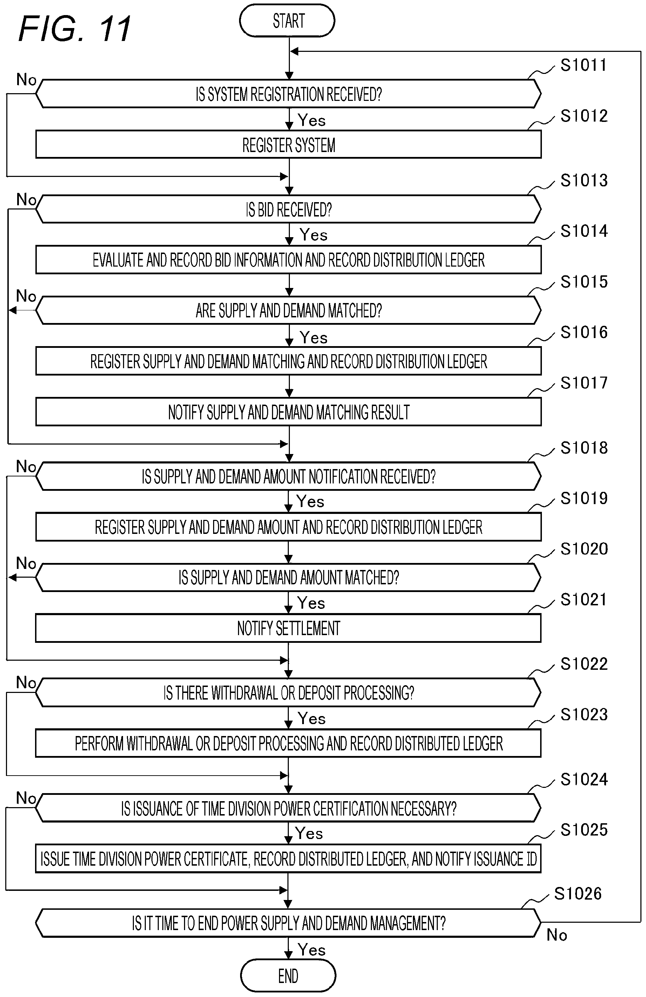

FIG. 11 is a flowchart illustrating a power supply and demand management procedure of the power supply and demand management device 50. The power supply and demand management device 50 determines whether system registration for participating in a power supply and demand trade has been received from a power supply system or the like (Step S1011). In a case where it is determined in the determination of Step S1011 that the system registration for participating in the power supply and demand trade is received (Yes in Step S1011), the power supply and demand management device 50 executes the system registration (Step S1012).

In a case where it is determined in the determination in Step S1011 that the system registration for participating in the power supply and demand trade has not been received (No in Step S1011), or after execution of Step S1012, the reception unit 71 subsequently determines whether the supply for the power trade or the demand bid has been received (Step S1013).

In a case where it is determined in the determination of Step S1013 that the reception unit 71 has received the bid for participation in the power supply and demand trade, the evaluation unit 76 determines whether the sender is qualified to bid for the received bid information. When there is no problem, the reception unit 71 receives the bid, the storage unit 74 stores the bid information, and requests the distributed ledger system 60 to perform backup storage (Step S1014).

Subsequently, the matching unit 72 determines whether there is a supply and demand bid with matching conditions between the power supply bid and the demand bid (matches) (Step S1015).

When it is determined in the determination of Step S1015 that there is the supply and demand bid with matching conditions (there is supply and demand matching) (Yes in Step S1015), the matching unit 72 creates the power supply and demand contract data 310 from the bid data with matching conditions, stores the power supply and demand contract data in the storage unit 74, and requests the distributed ledger system 60 to perform backup storage (Step S1016). The power supply and demand management device 50 notifies the result of establishment of the contract to the demand-side system and the supply-side system that have performed the supply and demand bid meeting the conditions (Step S1017).

In a case where it is determined in the determination in Step S1013 that no bid for participation in the power supply and demand trade has been received (Yes in Step S1013), or in a case where it is determined in the determination in Step S1015 that there is no supply and demand bid with matching conditions (there is supply and demand matching) (No in Step S1015), or after execution of Step S1017, the power supply and demand management device 50 determines whether a notification related to the measured power supply amount or the power demand amount has been received (Step S1018).

In a case where it is determined in the determination in Step S1018 that the notification related to the measured power supply amount or the power demand amount has been received (Yes in Step S1018), the power supply and demand management device 50 causes the storage unit 74 to store the received power supply amount or notification data related to the power demand amount (power supply amount data 410 and power demand amount data 460), and the distributed ledger system 60 to performs the backup storage (Step S1019).

Subsequently, the power supply and demand management device 50 determines whether there is consistency between the supply and demand power amounts with respect to the received power supply amount or the power demand amount (Step S1020).

In a case where it is determined in the determination of Step S1020 that there is consistency between the supply and demand power amounts (Yes in Step S1020), the power supply and demand management device 50 notifies the settlement of the supply power and the demand power (Step S1021).

In a case where it is determined in the determination in Step S1018 that the notification regarding the measured power supply amount or the power demand amount has not been received (No in Step S1018), or in a case where it is determined in the determination in Step S1020 that there is no consistency between the supply and demand power amounts (No in Step S1020), or after execution of Step S1021, the power supply and demand management device 50 determines whether it is necessary to perform withdrawal processing or deposit processing as the settlement processing (Step S1022).

In the determination of Step S1022, in a case where it is determined that the withdrawal processing is necessary as the settlement processing, the withdrawal processing is performed, and in a case where the deposition processing is necessary, the deposition processing is performed, the storage unit 74 stores the record of the executed deposit/withdrawal (deposit/withdrawal data 157), and the distributed ledger system 60 performs the backup storage (Step S1023).

In a case where it is determined in the determination in Step S1022 that the withdrawal processing or the deposit processing is not necessary as the settlement processing (No in Step S1022), or after execution of Step S1023, the issuance unit 73 determines whether it is necessary to issue the time division power certificate 500 or the time division power certificate 550 (the latter is issued by updating the former) (Step S1024).

In a case where it is determined in the determination of Step S1024 that it is necessary to issue the time division power certificate 500 or the time division power certificate 550, the issuance unit 73 or the update unit 75 issues the time division power certificate 500 or the time division power certificate 550, causes the storage unit 74 to store the time division power certificate or the time division power certificate, instructs the distributed ledger system to perform backup storage thereof, and notifies the system on the demand side using the renewable energy power of the main certification ID503 of the time division power certificate 500 or the time division power certificate 550.

In a case where it is determined in the determination in Step S1024 that issuance of the time division power certificate 500 or the time division power certificate 550 is not necessary (No in Step S1024), or after execution of Step S1025, the power supply and demand management device 50 determines whether it is time to end the power supply and demand management (time to end the power supply and demand trade) (Step S1026).

When it is determined in the determination in Step S1026 that it is the time to end the supply and demand management of power (Yes in Step S1026), the power supply and demand management device 50 ends the power supply and demand management processing (Step S1027).

When it is determined in the determination of Step S1026 that it is not the time to end the supply and demand management of power (No in Step S1026), the power supply and demand management device 50 returns the processing to Step S1011 and continues the power supply and demand management processing.

According to the power supply and demand management system 1 of the first embodiment described above, the above-described first processing can be executed. Therefore, even in a case where the charge and discharge system 40 is on the power supply side, the supply bid is made by presenting (the main certification ID503 of) the time division power certificate 500. In addition, since the date and the time zone (time slot) when the renewable energy power is received are described in the field of the power usage time division 507 in the time division power certificate 500, it is possible to reliably guarantee that the power to be sold by the charge and discharge system 40 is derived from the renewable energy.

Therefore, according to the power supply and demand management system 1, the trade of renewable energy power can be promoted.

Further, according to the power supply and demand management system 1, the above-described second processing can be executed. Therefore, when the renewable energy power is consumed on the demand side, the time division power certificate 550 cannot be rewritten, and thus it is possible to suppress selling non-renewable energy power by misusing the time division power certificate 550 as renewable energy power.

Further, according to the power supply and demand management system 1, the above-described third processing can be executed. Therefore, since it is possible to reliably guarantee that the supply bid of the charge and discharge system 40 is made for the renewable energy power, it is possible to enhance the safety of the trade of the renewable energy power.

Furthermore, according to the power supply and demand management system 1, the above-described fourth processing can be executed. Therefore, since the trade of the renewable energy power that cannot be supplied can be suppressed, the safety of the trade of renewable energy power can be enhanced also in this respect.

Further, according to the power supply and demand management system 1, the distributed ledger system 60 performs the backup storage on the time division power certificate 500 and the time division power certificate 550. Therefore, it is possible to back up the time division power certificate 500 and the time division power certificate 550 and to suppress falsification thereof. Therefore, also in this respect, according to the power supply and demand management system 1, it is possible to enhance the safety of trade of the renewable energy power.

Note that, in the first embodiment, an example has been described in which matching between power supply and demand is performed for power supply bid and demand bid in a case where the time slot is set to 15 minutes and the power supply amount and the demand amount are the same. However, the first embodiment may be applied to a case where other power supply amounts and the demand amount are different from each other or a case where the time slots is different from each other. For example, as a case where the supply amount of power and the demand amount are different from each other, in a case where the supply amount of power is larger than the demand amount, partial matching of supply and demand may be performed on the demand amount, and supply bid for the remaining supply amount of the remaining power may be effectively continued. Alternatively, when the demand amount of power is larger than the supply amount, partial matching of supply and demand may be performed on the supply amount of power, and demand bid for the remaining demand amount may be effectively continued. Meanwhile, the first embodiment may be applied to a case where the time slots of the power supply bid and the demand bid are different from each other. For example, in a case where a time width of the time slot for supplying power is wider than a time width of the time slot on the demand side, partial matching of supply and demand may be performed on the time width of the time slot on the demand side, and remaining supply bid for the time width of the remaining time slot on the supply side may be effectively continued. In addition, in a case where the time width of the time slot on the demand side of power is wider than the time width of the time slot on the supply side, partial matching of supply and demand may be performed on the time width of the time slot on the supply side, and demand bid for a remaining time width of the time slot on the demand side may be effectively continued.

### Second Embodiment

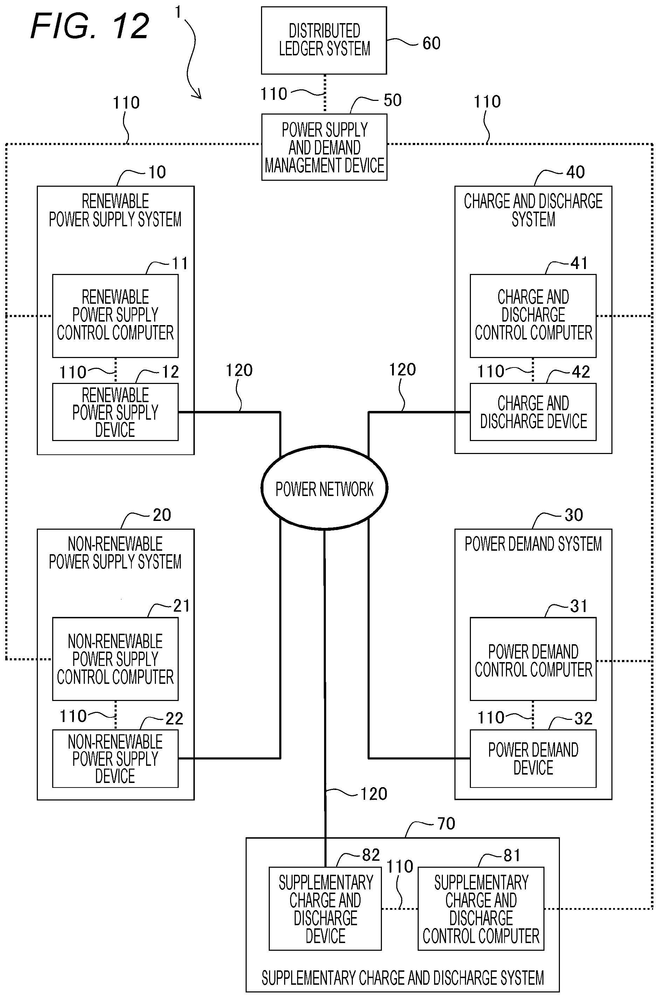

FIG. 12 is a block diagram of a system according to a second embodiment. Since members and the like having the same reference numerals as those in the first embodiment are common to those in the first embodiment, detailed description thereof will be omitted. The system configuration of the second embodiment is different from that of the first embodiment in that one or more supplementary charge and discharge systems 70 are prepared. The supplementary charge and discharge system 70 includes a supplementary charge and discharge device 82 such as a battery that is connected to the power network 120 and charges and discharges power, and a supplementary charge and discharge control computer 81 that is a computer communicably connected to the power supply and demand management device 50 via the communication network 110. The supplementary charge and discharge control computer 81 communicates with the supplementary charge and discharge device 82 via the communication network 110 to control the supplementary charge and discharge device 82. In the power network 120, the supplementary charge and discharge system 70 supplies charged power in a case where power is insufficient, and consumes (charges) power in a case where the power is excessive. That is, the supplementary charge and discharge system 70 is also on the power demand side and the power supply side. The supplementary charge and discharge system 70 charges renewable energy power and non-renewable energy power in advance to perform the power supply compensation. In addition, the supplementary charge and discharge system 70 ensures a free charge area in order to charge surplus power.

The hardware configuration of the power supply and demand management device 50 in the second embodiment is similar to that in the first embodiment. However, in the second embodiment, in addition to the above-described first processing to fourth processing, the following fifth processing and sixth processing 5 and 6 are also executed.

### (5) Fifth Processing

When shortage of the renewable energy power occurs on the power supply side when the charge and discharge system 40 receives the renewable energy power as the power demand side as a result of the matching by the matching unit 72, in a case where the second charge and discharge system (supplementary charge and discharge system 70) that supplies the shortage of renewable energy power supplies the renewable energy power derived from the same or similar power supply as the renewable energy power, the issuance unit 73 describes the power supply type 510, which is the type of renewable energy power, in the certificate (time division power certificate 500).

### (6) Sixth Processing

When there is a third charge and discharge system (supplementary charge and discharge system 70) that receives renewable energy power in excess of the demand amount due to shortage of the demand amount of the renewable energy power on the demand side of power, the issuance unit 73 issues the certificate (time division power certificate 500) according to the power amount of the renewable energy power consumed by the demand side at the time of power reception and the power amount of the renewable energy power received by the third charge and discharge system (supplementary charge and discharge system 70).

Hereinafter, contents of the specific implementation processing of the fifth processing and sixth processing will be described in detail.

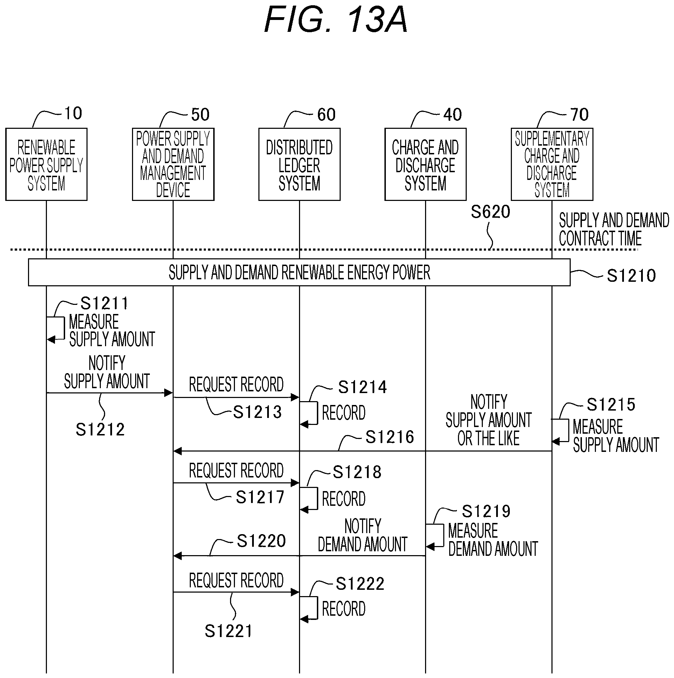

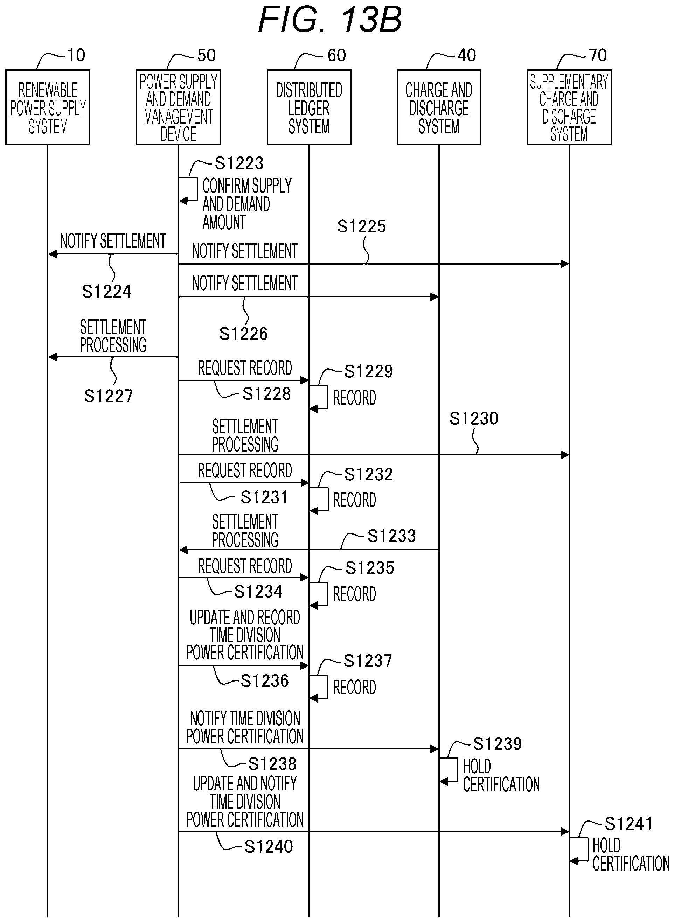

FIG. 13 is an example of a power supply and demand sequence diagram with power supply compensation in the second embodiment. FIG. 13A is an example of a sequence diagram for power supply and demand amount measurement with power supply compensation. FIG. 13B is an example of a sequence diagram for power supply and demand settlement with the power supply compensation. In FIGS. 13A and 13B, the supplementary supply of the renewable energy power is performed from the supplementary charge and discharge system 70, but a supplementary renewable power supply system 10 may be further included.

The example of FIG. 13 is a case where, for example, when a sales contract for renewable energy power in which the power supply type 510 is solar energy (PV) is established, when the contracted supply of renewable energy power derived from solar energy cannot be sufficiently performed due to, for example, a failure occurring in the renewable power supply system 10, the supplementary charge and discharge system 70 compensates for the insufficient power supply. In this case, the power to compensate for the shortage must be the same power type, in the above case, renewable energy power derived from solar energy.

FIG. 13A illustrates a power supply and demand amount measurement sequence in a case where the supply of the renewable energy power from the renewable power supply system 10 is insufficient in a case where the power supply and demand contract illustrated in FIG. 9A is established. At the supply and demand contract time of the power for which the contract is established in FIG. 9A (Step S620), the renewable power supply system 10 supplies renewable energy power, the charge and discharge system 40 charges the supplied power, and the supplementary charge and discharge system 70 supplies insufficient power (insufficient due to partial failure or the like of the renewable power supply system 10) to the power network 120 (Step S1210).

The renewable power supply system 10 measures the amount of supplied power (Step S1211). In addition, the renewable power supply system 10 notifies the power supply and demand management device 50 of the measured power supply amount data 410 (FIG. 6A) (Step S1212).

In the power supply and demand management device 50, the storage unit 74 stores the received power supply amount data 410 (FIG. 8), and requests the distributed ledger system 60 to perform backup storage on the received power supply amount data 410 (Step S1213).

The distributed ledger system 60 performs backup storage on the received power supply amount data 410 (Step S1214).

The supplementary charge and discharge system 70 measures the amount of supplied power (Step S1215). In addition, the supplementary charge and discharge system 70 notifies the power supply and demand management device 50 of the power supply amount data 410 related to the measured power amount and the main certification ID503 (FIG. 7A) of the held time division power certificate 500 (Step S1216). The time division power certificate 500 matches the power supply type 510 with the renewable energy power supplied by the deficient renewable power supply system 10 (when derived from photovoltaic, the power supply type 510 is also photovoltaic). That is, when the supply side is short of renewable energy power derived from photovoltaic, for example, the supplementary charge and discharge system 70 notifies the power supply type 510 of the main certification ID503 of the time division power certificate 500 similarly describing photovoltaic (PV) (Step S1216).

The storage unit 74 stores the received power supply amount data 410 (FIG. 8), and requests the distributed ledger system 60 to perform backup storage on the received power supply amount data 410 (Step S1217).

The distributed ledger system 60 performs backup storage on the received power supply amount data 410 (Step S1218).

The charge and discharge system 40 measures the amount of charged power (Step S1219). In addition, the charge and discharge system 40 notifies the power supply and demand management device 50 of the power demand amount data 460 related to the measured amount of renewable energy power (Step S1220).

The storage unit 74 stores the received power demand amount data 460 (FIG. 8), and requests the distributed ledger system 60 to perform backup storage on the power demand amount data 460 (Step S1221).

The distributed ledger system 60 performs backup storage on the received power demand amount data 460 (Step S1222).

In FIG. 13B, the evaluation unit 76 checks consistency between the sum of the amount of renewable energy power supplied from the renewable power supply system 10 and the amount of power supplied from the supplementary charge and discharge system 70 in a supplementary manner and the amount of renewable energy power charged by the charge and discharge system 40 with respect to the established power supply and demand contract (Step S1223). Based on the established supply and demand contract for power, whether the power to be supplemented from the supplementary charge and discharge system 70 is the same power supply type 510 as the renewable energy power that is deficient on the demand side is confirmed by the time division power certificate 500 indicated by the received main certification ID503 (when the renewable energy power derived from the photovoltaic is insufficient on the supply side, the power to be supplemented by the supplementary charge and discharge system 70 also needs to be derived from the photovoltaic). When there is no problem in the supply and demand consistency with respect to the renewable energy power in the evaluation unit 76, the power supply and demand management device 50 notifies the renewable power supply system 10 of the settlement determination (Step S1224). Specifically, a payment determination notification of a consideration (unit price × supply amount) for the amount of supplied renewable energy power is made. The power supply and demand management device 50 notifies the supplementary charge and discharge system 70 of the settlement determination (Step S1225). Specifically, the payment determination notification of consideration for the supplemented renewable energy power is made. Further, the power supply and demand management device 50 notifies the charge and discharge system 40 of the settlement determination (Step S1226). Specifically, a payment request notification of a consideration (unit price × supply amount) for the renewable energy power amount charged by the charge and discharge system 40 is made.

The power supply and demand management device 50 performs payment settlement to the renewable power supply system 10 according to the determined settlement amount (Step S1227). In addition, the storage unit 74 stores payment settlement data (deposit/withdrawal data 157) to the renewable power supply system 10 (FIG. 8), and requests the distributed ledger system 60 to perform backup storage on the payment settlement data (deposit/withdrawal data 157) (Step S1228).

The distributed ledger system 60 performs backup storage on payment settlement data (deposit/withdrawal data 157) for the received renewable power supply system 10 (Step S1229).

The power supply and demand management device 50 performs payment settlement to the supplementary charge and discharge system 70 according to the determined settlement amount (Step S1230). In addition, the storage unit 74 stores payment settlement data (deposit/withdrawal data 157) for the supplementary charge and discharge system 70, and requests the distributed ledger system 60 to perform backup storage on the payment settlement data (deposit/withdrawal data 157) (Step S1231).

The distributed ledger system 60 performs backup storage on payment settlement data (deposit/withdrawal data 157) for the received supplementary charge and discharge system 70 (Step S1232).

The charge and discharge system 40 performs payment settlement to the power supply and demand management device 50 according to the determined settlement amount (Step S1233).

The storage unit 74 stores the deposit settlement data (deposit/withdrawal data 157) from the charge and discharge system 40, and requests the distributed ledger system 60 to perform backup storage on the deposit settlement data (deposit/withdrawal data 157) (Step S1234).

The distributed ledger system 60 performs backup storage on the received deposit settlement data (deposit/withdrawal data 157) from the charge and discharge system 40 (Step S1235).

When the deposit settlement from the charge and discharge system 40 is completed, the update unit 75 updates the time division power certificate 500 presented from the supplementary charge and discharge system 70 with respect to the amount of consumed and discharged renewable energy power, and issues new updated time division power certificates 550 to the charge and discharge system 40 and the supplementary charge and discharge system 70, respectively. The storage unit 74 stores the updated time division power certificates (time division power certificate data 156 in FIG. 8), and requests the distributed ledger system 60 to perform backup record (Step S1236).

The distributed ledger system 60 performs backup storage on the received time division power certificate 550 (Step S1237).

The power supply and demand management device 50 notifies the charge and discharge system 40 of the main certification ID503 of the data of the issued time division power certificate 550 (Step S1238).

The charge and discharge system 40 holds the main certification ID503 of the data of the received time division power certificate 550 (Step S1239).

The power supply and demand management device 50 notifies the supplementary charge and discharge system 70 of the update of the provided time division power certificate 500 and the main certification ID503 of the updated time division power certificate 550 (Step S1240).

The supplementary charge and discharge system 70 holds the main certification ID503 of the received time division power certificate 550 (Step S1241).

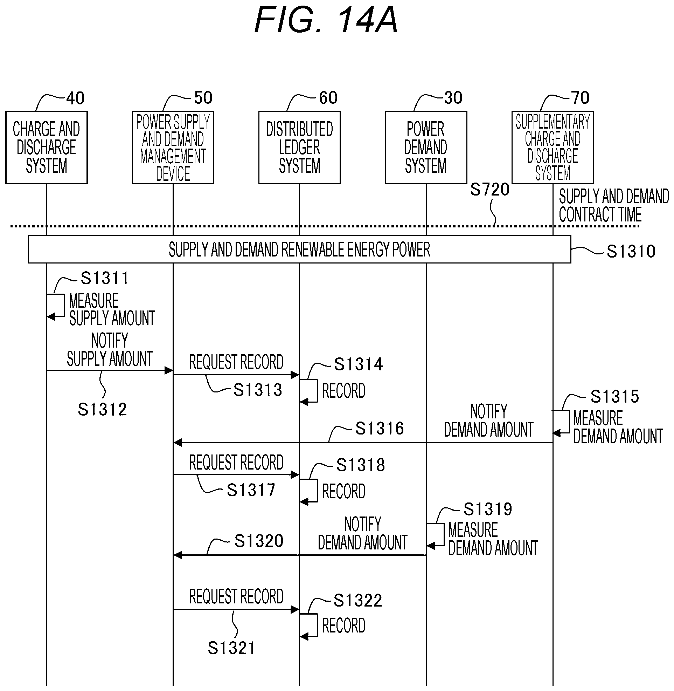

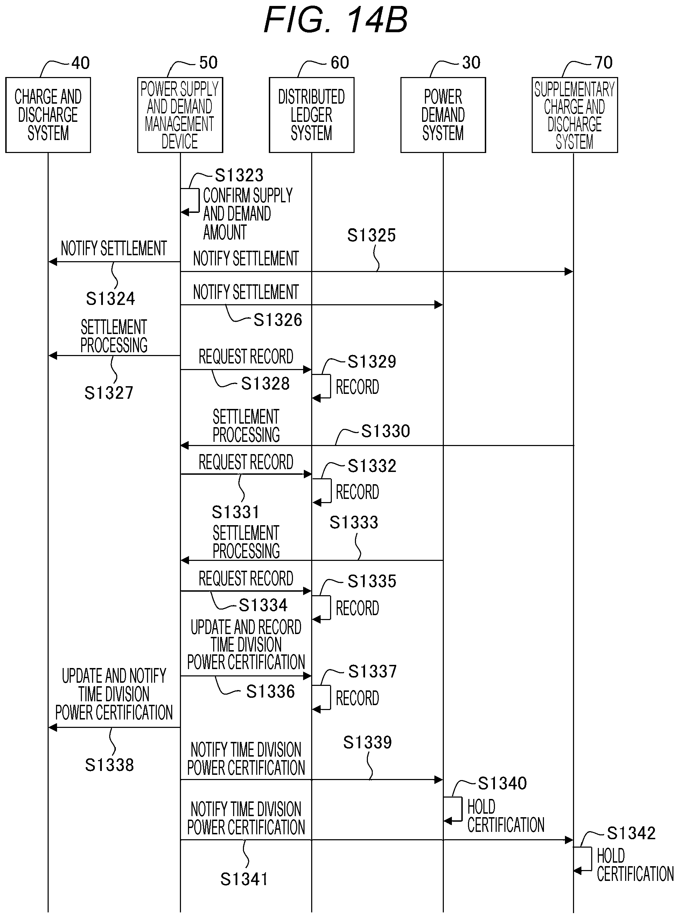

FIG. 14 is an example of a power supply and demand sequence diagram with power demand compensation in the second embodiment. FIG. 14A is an example of a sequence diagram for power supply and demand amount measurement with power demand compensation. FIG. 14B is an example of a sequence diagram for power supply and demand settlement with power demand compensation. In FIGS. 14A and 14B, the renewable energy power is supplied from the charge and discharge system 40, but the renewable energy power may be supplied from the renewable power supply system 10.

The example of FIG. 14 is a case where a part of the demand for renewable energy power is insufficient due to a failure or the like of a device on the power demand side, that is, a part of the power demand system 30. In the power network 120, the supply amount and the demand amount of power need to match. In particular, in a case where AC power is supplied, when the supply amount and the demand amount of power do not match, a frequency deviation of power and a voltage deviation occur. Therefore, the administrator of the power network 120 manages whether the frequency deviation or the voltage deviation occurs, and performs control in the power network 120 to arouse a demand for power when the supply of power is large and to compensate for the supply of power when the supply of power is small. Since the power supply and demand management device 50 can also sense that a part of the demand for renewable energy power in the power network 120 is insufficient, the power supply and demand management device 50 takes measures using the supplementary charge and discharge system 70.

FIG. 14A illustrates a power supply and demand amount measurement sequence in a case where the demand amount of renewable energy power in the power demand system 30 is insufficient due to a failure or the like of a part of the power demand system 30 in a case where the power supply and demand contract illustrated in FIG. 10 A is established. At the power supply and demand time (Step S720) at which the contract is established in FIG. 10 A, the charge and discharge system 40 supplies renewable energy power, the power demand system 30 consumes the renewable energy power, and the supplementary charge and discharge system 70 consumes (charges) surplus power in the power network 120 (Step S1310).

The charge and discharge system 40 measures the amount of supplied power (Step S1311). In addition, the charge and discharge system 40 notifies the power supply amount data 410 related to the measured renewable energy power amount to the power supply and demand management device 50 (Step S1312).

The storage unit 74 stores the received power supply amount data 410 (FIG. 8), and requests the distributed ledger system 60 to perform backup storage on the power supply amount data 410 (Step S1313).

The distributed ledger system 60 performs backup storage on the received power supply amount data 410 (Step S1314).

The supplementary charge and discharge system 70 measures the amount of charged power (Step S1315). In addition, the supplementary charge and discharge system 70 notifies the power supply and demand management device 50 of the power demand amount data 460 related to the measured power amount (Step S1316).

The storage unit 74 stores the received power demand amount data 460 (FIG. 8), and requests the distributed ledger system 60 to perform backup storage (Step S1317).

The distributed ledger system 60 performs backup storage on the received power demand amount data 460 (Step S1318).

The charge and discharge system 40 measures the amount of charged power (Step S1319). In addition, the charge and discharge system 40 notifies the power supply and demand management device 50 of the power demand amount data 460 related to the measured renewable energy power amount (Step S1320).

The storage unit 74 stores the received power demand amount data 460 (FIG. 8), and requests the distributed ledger system 60 to perform backup storage on the power demand amount data (Step S1321).

The distributed ledger system 60 performs backup storage on the received power demand amount data 460 (Step S1322).

In FIG. 14B, the evaluation unit 76 checks consistency between the supplied renewable energy power amount and the sum of the charged power amount and the consumed power amount as compensation for the established power supply and demand contract (Step S1323). When there is no problem in the supply and demand consistency with respect to the renewable energy power, the power supply and demand management device 50 notifies the charge and discharge system 40 of the settlement determination (Step S1324). Specifically, a payment determination notification of a consideration (unit price × supply amount) for the supplied renewable energy power amount is made. The power supply and demand management device 50 notifies the supplementary charge and discharge system 70 of the settlement determination (Step S1325). Specifically, based on the established supply and demand contract for power, a request for payment for the charged renewable energy power is notified as compensation by the power supply type 510 specified in the contract. Further, the power supply and demand management device 50 notifies the power demand system 30 of the settlement determination (Step S1326). Specifically, a request for payment of a consideration (unit price × supply amount) for the consumed renewable energy power amount is notified.

The power supply and demand management device 50 performs payment settlement to the charge and discharge system 40 according to the determined settlement amount (Step S1327). In addition, the storage unit 74 stores payment settlement data (deposit/withdrawal data 157) for the renewable power supply system 10 (FIG. 8), and requests the distributed ledger system 60 to perform backup storage on the payment settlement data (Step S1328).

The distributed ledger system 60 performs backup storage on payment settlement data (deposit/withdrawal data 157) for the received renewable power supply system 10 (Step S1329).

The supplementary charge and discharge system 70 performs payment settlement to the power supply and demand management device 50 according to the determined settlement amount (Step S1330).

The storage unit 74 stores the deposit settlement data (deposit/withdrawal data 157) from the supplementary charge and discharge system 70 (FIG. 8), and requests the distributed ledger system 60 to perform backup storage on the deposit/settlement data (Step S1331).

The distributed ledger system 60 performs backup storage on the received deposit settlement data (deposit/withdrawal data 157) from the supplementary charge and discharge system 70 (Step S1332).

The power demand system 30 performs payment settlement to the power supply and demand management device 50 according to the determined settlement amount (Step S1333).

The storage unit 74 stores deposit settlement data (deposit/withdrawal data 157) from the power demand system 30 (FIG. 8), and requests the distributed ledger system 60 to perform backup storage on the deposit settlement data (Step S1334).

The distributed ledger system 60 records the received deposit settlement data (deposit/withdrawal data 157) from the power demand system 30 (Step S1335).

When the deposit settlement from the supplementary charge and discharge system 70 and the power demand system 30 is completed, the power supply and demand management device 50 updates the time division power certificate 500 presented from the charge and discharge system 40 by the update unit 75 with respect to the amount of charged and consumed renewable energy power in the power supply type 510 designated in the contract, and issues a new time division power certificate 550 to the power demand system 30. Meanwhile, the issuance unit 73 issues a new time division power certificate 500 to the supplementary charge and discharge system 70. Then, the storage unit 74 stores the new time division power certificate (the time division power certificate data 156 in FIG. 8), and requests the distributed ledger system 60 to also perform backup storage on the data (Step S1336).

The distributed ledger system 60 performs backup storage on the received time division power certificate 550 (Step S1337).

The power supply and demand management device 50 notifies the charge and discharge system 40 that the provided time division power certificate 500 has been updated (Step S1338).

The power supply and demand management device 50 notifies the power demand system 30 of the main certification ID503 of the issued time division power certificate 550 (Step S1339).

The power demand system 30 holds the main certification ID503 of the received time division power certificate 550 (Step S1340).

The power supply and demand management device 50 notifies the supplementary charge and discharge system 70 of the main certification ID 503 of the issued time division power certificate 550 and time division power certificate 500 (Step S1341).

The supplementary charge and discharge system 70 holds the main certification IDs 503 of the received time division power certificate 550 and time division power certificate 500 (Step S1342).

According to the power supply and demand management system 1 described above, the above-described fifth processing is executed. Therefore, when the supply of power is insufficient, it can be ensured that the supplementary charge and discharge system 70 supplies the same renewable energy power of the power supply type 510 as the shortage. Therefore, the use of renewable energy power can be promoted.

According to the power supply and demand management system 1, the above-described sixth processing is executed. Therefore, the update unit 75 updates the time division power certificate 500 presented from the charge and discharge system 40, and issues a new time division power certificate 550 to the power demand system 30. Meanwhile, the issuance unit 73 issues a new time division power certificate 500 to the supplementary charge and discharge system 70. Therefore, when the power demand is insufficient, it is possible to reliably guarantee that the power corresponding to the charge is the renewable energy power even when the supplementary charge and discharge system 70 compensates for the insufficient demand for charging. Therefore, the use of renewable energy power can be promoted.

### Third Embodiment

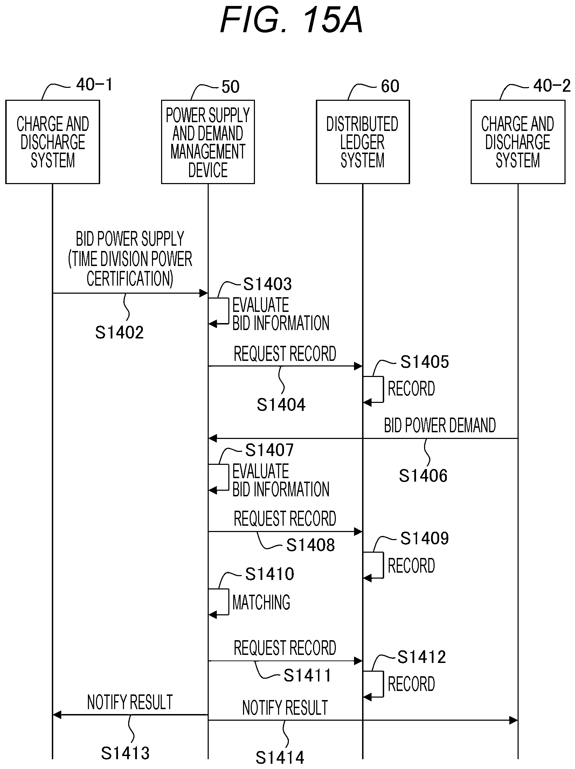

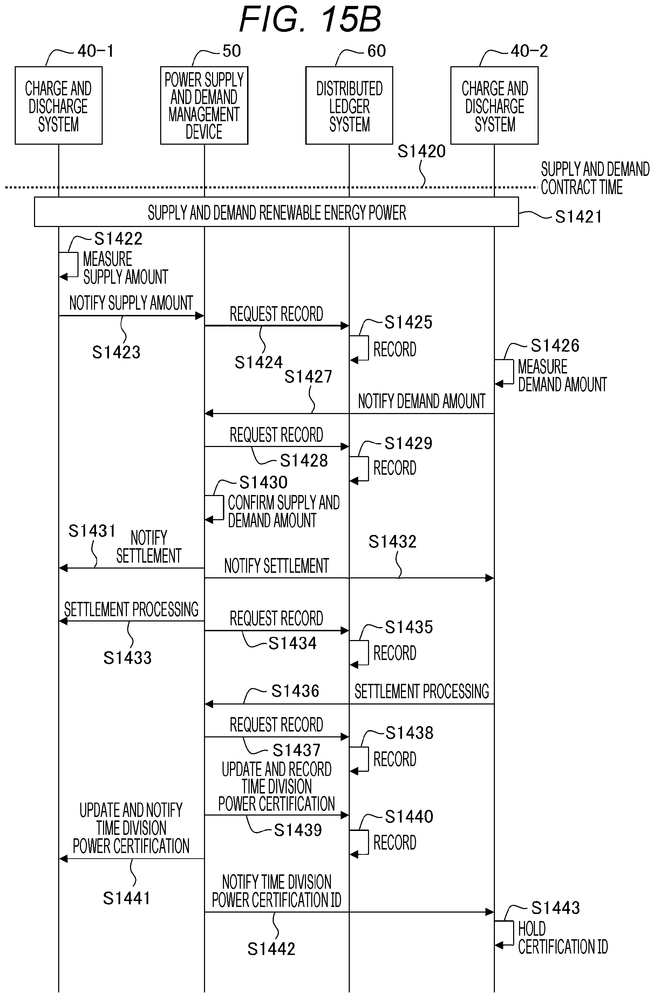

In a third embodiment, a supply and demand operation of discharge power executed between different charge and discharge systems 40 will be described with reference to FIG. 15. FIG. 15A is an example of a supply and demand contract sequence diagram of discharge power between different charge and discharge systems. FIG. 15B is an example of a supply and demand sequence diagram of discharge power between different charge and discharge systems. That is, the charge and discharge system 40 capable of charging and discharging power is on both the demand side and the supply side of power. In the third embodiment, the charge and discharge system 40 on the power demand side is referred to as a charge and discharge system 40-2, and the charge and discharge system 40 on the supply side is referred to as a charge and discharge system 40-1.

In FIG. 15A, the charge and discharge system 40-1 bids for supply of renewable energy power (renewable energy level: 100%) for which power selling is desired, to the power supply and demand management device 50 (Step S1402). In this supply bid, it is necessary to indicate that the supply of the renewable energy power is possible for the supply bid from the charge and discharge system 40-1 that does not generate the renewable energy power. Specifically, the charge and discharge system 40-1 needs to charge renewable energy power prior to this supply bid to indicate it is holding renewable energy power. Therefore, the charge and discharge system 40-1 bids to supply power including the main certification ID503 of the time division power certificate 500 indicating that renewable energy power is held.

In the power supply and demand management device 50, the evaluation unit 76 determines whether to supply renewable energy power with respect to the content of the received power supply bid data 210, and when there is no problem, the reception unit 71 receives the power supply bid data 210, and the storage unit 74 stores the power supply bid data 210 (Step S1403). In the power supply bid, the charge and discharge system 40-1 bids to supply power including the main certification ID503 of the time division power certificate 500 indicating that it holds renewable energy power, and the evaluation unit 76 determines that the supply of renewable energy power is possible.

In addition, the storage unit 74 requests the distributed ledger system 60 to perform backup storage on the power supply bid data 210 (Step S1404).

The distributed ledger system 60 performs backup storage on the received power supply bid data 210 (Step S1405).

The charge and discharge system 40-2 bids for demand of the necessary renewable energy power (renewable energy 100%) to the power supply and demand management device 50 (Step S1406).

The evaluation unit 76 confirms that the received content of the power demand bid data 260 is the power charge from the charge and discharge system 40-2, and when there is no problem, the reception unit 71 receives the demand bid, and the storage unit 74 stores the power demand bid data 260 (Step S1407). In addition, the storage unit 74 requests the distributed ledger system 60 to perform backup storage on the power demand bid data 260 (Step S1408).

The distributed ledger system 60 performs backup storage on the received power demand bid data 260 (Step S1409).

The matching unit 72 determines (match) whether conditions are met between the supply bid of power and the demand bid, and when there is the supply bid and the demand bid that meet the conditions, establishes the power supply and demand contract (Step S1410). When the power supply and demand contract is established, the storage unit 74 stores the established power supply and demand contract data 310 (FIG. 8), and requests the distributed ledger system 60 to perform backup storage on the established power supply and demand contract data 310 (Step S1411).

The distributed ledger system 60 performs backup storage on the received power supply and demand contract data 310 (Step S1412).

The power supply and demand management device 50 notifies the charge and discharge system 40-1 that the power supply bid contract has been established (Step S1413). In addition, the power supply and demand management device 50 notifies the charge and discharge system 40-2 that the contract for demand bid for power has been established (Step S1414).

In FIG. 15B, at the supply and demand contract time of the power for which the contract is established (Step S1420), the charge and discharge system 40-1 supplies the renewable energy power, and the charge and discharge system 40-2 charges the supplied power (Step S1421).

The charge and discharge system 40-1 measures the amount of supplied power (Step S1422). In addition, the charge and discharge system 40-1 notifies the power supply and demand management device 50 of the power supply amount data 410 related to the measured power amount (Step S1423).

The storage unit 74 stores the received power supply amount data 410, and requests the distributed ledger system 60 to perform backup storage on the power supply amount data 410 (Step S1424).

The distributed ledger system 60 performs backup storage on the received power supply amount data 410 (Step S1425).

The charge and discharge system 40-2 measures the amount of charged power (Step S1426). In addition, the charge and discharge system 40-2 notifies the power supply and demand management device 50 of the power demand amount data 460 related to the measured power amount (Step S1427).

The storage unit 74 stores the received power demand amount data 460 (FIG. 8), and requests the distributed ledger system 60 to perform backup storage on the power demand amount data 460 (Step S1428).

The distributed ledger system 60 performs backup storage on the received power demand amount data 460 (Step S1429).

The evaluation unit 76 checks consistency between the amount of supplied renewable energy power and the amount of charged renewable energy power with respect to the established power supply and demand contract (Step S1430). When there is no problem in the supply and demand consistency with respect to the renewable energy power, the power supply and demand management device 50 notifies the charge and discharge system 40-1 of the settlement determination (Step S1431). Specifically, a payment determination notification of a consideration (unit price × supply amount) for the amount of supplied renewable energy power is made. In addition, the power supply and demand management device 50 notifies the charge and discharge system 40-2 of settlement determination (Step S1432). Specifically, a payment request notification of a consideration (unit price × charge amount) for the amount of charged renewable energy power is made.

The power supply and demand management device 50 performs payment settlement to the charge and discharge system 40-1 according to the determined settlement amount (Step S1433). In addition, the storage unit 74 stores payment settlement data (deposit/withdrawal data 157) for the charge and discharge system 40-1 (FIG. 8), and requests the distributed ledger system 60 to perform backup storage on the payment settlement data (deposit/withdrawal data 157) for the charge and discharge system 40-1 (Step S1434).

The distributed ledger system 60 performs backup storage on payment settlement data (deposit/withdrawal data 157) for the received charge and discharge system 40-1 (Step S1435).

The charge and discharge system 40-2 performs payment settlement to the power supply and demand management device 50 according to the determined settlement amount (Step S1436).

The storage unit 74 stores the deposit settlement data (deposit/withdrawal data 157) from the charge and discharge system 40-2 (FIG. 8), and requests the distributed ledger system 60 to perform backup storage on the deposit settlement data (deposit/withdrawal data 157) from the charge and discharge system 40-2 (Step S1437).

The distributed ledger system 60 performs backup storage on the received deposit settlement data (deposit/withdrawal data 157) from the charge and discharge system 40-2 (Step S1438).

When the deposit settlement from the charge and discharge system 40-2 is completed, the issuance unit 73 issues the time division power certificate 500 for the amount of charged renewable energy power, and the storage unit 74 stores the time division power certificate and requests the distributed ledger system 60 to perform backup storage on the time division power certificate (Step S1439). Specifically, the time division power certificate 500 presented by the charge and discharge system 40-1 is updated to create the time division power certificate 500 to be provided to the charge and discharge system 40-2. Therefore, the storage unit 74 stores the update of the time division power certificate 500 assigned to the charge and discharge system 40-1, and requests the distributed ledger system 60 to perform backup storage. The time division power certificate 500 assigned to the charge and discharge system 40-2 is issued in response to charging of renewable energy power by the charge and discharge system 40-2, and indicates that the renewable energy power based on the time division power certificate 500 can be supplied. Therefore, "possible" is designated as the update possibility 513.

The distributed ledger system 60 performs backup storage on the received time division power certificate 500 (Step S1440).

The power supply and demand management device 50 notifies the charge and discharge system 40-1 that the provided time division power certificate 500 has been updated (Step S1441). In addition, the power supply and demand management device 50 notifies the charge and discharge system 40-2 of the main certification ID503 of the updated and issued time division power certificate 500 (Step S1442).

The charge and discharge system 40-2 holds the main certification ID503 of the received time division power certificate 500 (Step S1443).

Also in the third embodiment, as compared with the first embodiment, it is possible to achieve the same operational effects as those of the first embodiment except that the power demand side is changed from the renewable power supply system 10 to the charge and discharge system 40-1.

Note that the present invention is not limited to the above-described embodiments, and includes various modifications. For example, the above-described embodiments have been described in detail for easy understanding of the present invention, and are not necessarily limited to those having all the described configurations. In addition, a part of the configuration of a certain embodiment can be replaced with the configuration of another embodiment, and the configuration of another embodiment can be added to the configuration of a certain embodiment. In addition, it is also possible to add, delete, and replace other configurations for a part of the configuration of each embodiment.

In addition, some or all of the above-described configurations, functions, processing units, processing means, and the like may be realized by hardware, for example, by designing with an integrated circuit. In addition, each of the above-described configurations, functions, and the like may be realized by software by a processor interpreting and executing a program for realizing each function. Information such as a program, a table, and a file for realizing each function can be stored in a recording device such as a memory, a hard disk, and a solid state drive (SSD), or a recording medium such as an IC card, an SD card, and a DVD.

In addition, the control lines and the information lines indicate what is considered to be necessary for the description, and do not necessarily indicate all the control lines and the information lines on the product. In practice, it may be considered that almost all the configurations are connected to each other.

### Reference Signs List

1 power supply and demand management system
10 renewable power supply system (supply side)
30 power demand system (demand side)
40 charge and discharge system (supply side, demand side)
50 power supply and demand management device
60 distributed ledger system (backup device)
70 supplementary charge and discharge system (supply side, demand side, second charge and discharge system, and third charge and discharge system)
71 reception unit
72 matching unit
73 issuance unit
74 storage unit
75 update unit
76 evaluation unit
500 time division power certificate (certificate)
503 main certification ID (identification mark)
507 power usage time division
510 power supply type
511 amount of used power
512 available power amount
550 time division power certificate (certificate)

## Claims

1. A power supply and demand management system comprising:
a reception unit that receives a supply bid of renewable energy power from a supply side of the renewable energy power and a demand bid of the renewable energy power from a demand side of the renewable energy power via communication;
a matching unit that performs matching between the received supply bid and demand bid;
an issuance unit that, when a charge and discharge system capable of charging and discharging power receives renewable energy power as the demand side as a result of the matching, issues a correctable certificate indicating that the renewable energy received power that is the received renewable energy power is derived from the renewable energy; and
a storage unit that stores the certificate issued by the issuance unit,
wherein the issuance unit describes, in the certificate, a power usage time division indicating a date, time, and time zone when the renewable energy power is received.

2. The power supply and demand management system according to claim 1, further comprising an update unit that, when the charge and discharge system supplies the renewable energy received power charged in the charge and discharge system to the demand side as the supply side as the result of the matching, updates the certificate corresponding to the supplied renewable energy received power and makes the certificate uncorrectable.

3. The power supply and demand management system according to claim 1, wherein
the reception unit receives the certificate or an identification mark of the certificate from the charge and discharge system when receiving the supply bid from the charge and discharge system,
the power supply and demand management system further includes an evaluation unit that evaluates whether the charge and discharge system is capable of supplying the renewable energy received power based on the certificate or the identification mark received by the reception unit, and
the reception unit receives the supply bid from the charge and discharge system when the evaluation unit determines that the charge and discharge system can supply the renewable energy received power.

4. The power supply and demand management system according to claim 1, wherein when the charge and discharge system receives the renewable energy power as the demand side as the result of the matching, the issuance unit describes, in the certificate, an available power amount indicating an amount of power of the renewable energy power that can be supplied from the charge and discharge system.

5. The power supply and demand management system according to claim 4, wherein the available power amount is smaller than an amount of power of the renewable energy received power.

6. The power supply and demand management system according to claim 3, wherein the evaluation unit performs the evaluation based on an amount of power obtained by subtracting an amount of power naturally discharged according to a time difference from a time at which the charge and discharge system receives the renewable energy received power to a time at which the charge and discharge system supplies the renewable energy received power from an amount of power of the renewable energy power that can be supplied from the charge and discharge system.

7. The power supply and demand management system according to claim 1, further comprising a backup device that stores the certificate as a backup.

8. The power supply and demand management system according to claim 1, wherein when a shortage of the renewable energy power occurs on the supply side when the charge and discharge system receives the renewable energy power as the demand side as the result of the matching, in a case where a second charge and discharge system that supplies the shortage of the renewable energy power supplies the renewable energy power derived from a power supply same as or similar to the renewable energy power, the issuance unit describes a power supply type that is a type of the renewable energy power in the certificate.

9. The power supply and demand management system according to claim 1, wherein when there is a third charge and discharge system that receives the renewable energy power that has exceeded the demand amount due to shortage of the demand amount of the renewable energy power on the demand side, the issuance unit issues the certificates according to the power amount of the renewable energy power consumed by the demand side at the time of receiving the power and the power amount of the renewable energy power received by the third charge and discharge system.

10. A power supply and demand management method comprising:
a reception step of receiving each of a supply bid of renewable energy power from a supply side of the renewable energy power and a demand bid of the renewable energy power from a demand side of the renewable energy power via communication;
a matching step of performing matching between the received supply bid and demand bid;
an issuing step of, when a charge and discharge system capable of charging and discharging power receives renewable energy power as the demand side as a result of the matching, issuing a correctable certificate indicating that the renewable energy received power that is the received renewable energy power is derived from the renewable energy; and
a storage step of storing the certificate issued in the issuing step,
wherein, in the issuing step, a power usage time division indicating a date, time, and time zone when the renewable energy power is received is described in the certificate.

11. The power supply and demand management method according to claim 10, further comprising an update step of, when the charge and discharge system supplies the renewable energy received power charged in the charge and discharge system to the demand side as the supply side as the result of the matching, updating the certificate corresponding to the supplied renewable energy received power and making the certificate uncorrectable.

12. The power supply and demand management method according to claim 10, wherein
in the reception step, the certificate or an identification mark of the certificate from the charge and discharge system is received when receiving the supply bid from the charge and discharge system,
the method further includes an evaluation step of evaluating whether the charge and discharge system is capable of supplying the renewable energy received power based on the certificate or the identification mark received in the reception step, and
in the reception step, the supply bid is received from the charge and discharge system when it is determined that the charge and discharge system can supply the renewable energy received power in the evaluation step.

13. The power supply and demand management method according to claim 10, wherein in the issuing step, when the charge and discharge system receives the renewable energy power as the demand side as the result of the matching, an available power amount indicating an amount of power of the renewable energy power that can be supplied from the charge and discharge system is described in the certificate.

14. The power supply and demand management method according to claim 12, wherein in the evaluation step, the evaluation is performed based on an amount of power obtained by subtracting an amount of power naturally discharged according to a time difference from a time at which the charge and discharge system receives the renewable energy received power to a time at which the charge and discharge system supplies the renewable energy received power from an amount of power of the renewable energy power that can be supplied from the charge and discharge system.

15. The power supply and demand management method according to claim 10, further comprising a backup step of storing the certificate as a backup.
